# EUROPÄISCHE PATENTSCHRIFT

(11) **EP 4 392 296 B1**
(45) Veröffentlichungstag und Bekanntmachung des Hinweises auf die Patenterteilung: **25.09.2024**
(21) Anmeldenummer: 23798461.2
(22) Anmeldetag: 30.10.2023
(51) Int. Cl.: B60S 1/48, B60S 1/56, F04D 13/00

(54) **VERFAHREN ZUM REGELN EINES REINIGUNGSSYSTEMS FÜR KRAFTFAHRZEUGKOMPONENTEN, REINIGUNGSSYSTEM FÜR KRAFTFAHRZEUGKOMPONENTEN UND KRAFTFAHRZEUG MIT REINIGUNGSSYSTEM FÜR KRAFTFAHRZEUGKOMPONENTEN**
METHOD FOR CONTROLLING A CLEANING SYSTEM FOR MOTOR VEHICLE COMPONENTS, CLEANING SYSTEM FOR MOTOR VEHICLE COMPONENTS, AND MOTOR VEHICLE WITH A CLEANING SYSTEM FOR MOTOR VEHICLE COMPONENTS
PROCÉDÉ DE COMMANDE D'UN SYSTÈME DE NETTOYAGE DE COMPOSANTS DE VÉHICULE À MOTEUR, SYSTÈME DE NETTOYAGE DE COMPOSANTS DE VÉHICULE À MOTEUR, ET VÉHICULE À MOTEUR COMPRENANT UN SYSTÈME DE NETTOYAGE DE COMPOSANTS DE VÉHICULE À MOTEUR

(30) Priorität: 31.10.2022 DE 102022128859
(43) Veröffentlichungstag der Anmeldung: 03.07.2024
(73) Patentinhaber: Kautex Textron GmbH & Co. KG, 53229 Bonn (DE)
(72) Erfinder: Behr, Christian, 53225 Bonn (DE); Müller, René Erich, 53121 Bonn (DE); Xi, Cheng, 53111 Bonn (DE)
(74) Vertreter: Richly & Ritschel Patentanwälte PartG mbB
(86) Internationale Anmeldenummer: PCT/EP2023/080212
(87) Internationale Veröffentlichungsnummer: WO 2024/094609

(56) Entgegenhaltungen:
- FR-A1- 3 094 311
- FR-A1- 3 097 826
- FR-A1- 3 119 136
- FR-A1- 3 121 896
- US-A1- 2020 001 331
- US-A1- 2022 032 879

## Beschreibung

Die vorliegende Erfindung betrifft ein Verfahren zum Regeln eines Reinigungssystems für Kraftfahrzeugkomponenten. Ferner betrifft die vorliegende Erfindung ein Reinigungssystem für Kraftfahrzeugkomponenten zum Ausführen des Verfahrens. Weiterhin betrifft die vorliegende Erfindung ein Kraftfahrzeug mit einem Komponentenreinigungssystem.

Kraftfahrzeuge und insbesondere Kraftfahrzeuge, die zum autonomen bzw. teilautonomen Fahren ausgebildet sind, weisen üblicherweise eine Vielzahl von Sensoren auf, mittels denen die Umgebung und/oder eine Fahrsituation des Kraftfahrzeugs überwachbar ist. Diese als Kraftfahrzeugsensoren ausgebildeten Kraftfahrzeugkomponenten können beispielsweise optische Sensoren, Kameras, Radar-Sensoren oder Lidar-Sensoren aufweisen.

Zur Gewährleistung der Funktionsfähigkeit und Einsatzbereitschaft von Kraftfahrzeugkomponenten und insbesondere von Kraftfahrzeugsensoren ausgebildeten Kraftfahrzeugkomponenten müssen diese regelmäßig gereinigt werden. Je nach Kraftfahrzeugkomponente oder je nach Sensorart und je nach Verschmutzungsgrad muss eine Reinigungseinrichtung (Reinigungsdüse) eines Reinigungssystems die betreffende Komponente und/oder den betreffenden Sensor entsprechend einer Reinigungsanfrage mit einem Reinigungsfluid mit einem vorbestimmten Fluiddruck für eine vorbestimmte Zeit beaufschlagen.

Bisher sind Reinigungssysteme angedacht, die eine Vielzahl von Drucksensoren oder Durchflusssensoren aufweisen, die üblicherweise jeweils einer Reinigungsdüse zugeordnet sind. Diese Vielzahl von Drucksensoren oder Durchflusssensoren sind im Reinigungssystem derart angeordnet und dazu ausgebildet, die Fluiddrücke bzw. die Durchflussmenge des Reinigungsfluids, das aus den jeweiligen Reinigungsdüsen ausgegeben werden, zu bestimmen. Mittels dieser Fluiddruckinformationen wird eine zentrale Fluidfördereinrichtung (Pumpe) derart gesteuert, dass einer Reinigungsanforderung erfüllt wird.

Die aus dem Stand der Technik bekannten Reinigungssysteme (siehe zum Beispiel : FR-A-3121896) weisen folglich eine Vielzahl von Bauteilen und insbesondere eine Vielzahl von Drucksensoren und/oder Durchflusssensoren auf. Hierdurch sind diese Reinigungssysteme fehleranfällig und kostenintensiv. Die Verfahren zum Steuern der entsprechenden Reinigungssysteme sind entsprechend aufwendig.

Der vorliegenden Erfindung liegt die Aufgabe zugrunde, ein Verfahren zum Regeln eines Reinigungssystems für Kraftfahrzeugkomponenten bereitzustellen, welches eine vereinfachte Steuerung des Reinigungssystems ermöglicht und es ferner ermöglicht, dass das Reinigungssystem weniger fehleranfällig und weniger kostenintensiv ist.

Die der vorliegenden Erfindung zugrundeliegende Aufgabe wird gemäß eines ersten Aspekts durch ein Verfahren mit den Merkmalen von Anspruch 1 gelöst. Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zum Regeln eines Reinigungssystems für Kraftfahrzeugkomponenten gelöst, wobei das Reinigungssystem eine Fluidfördereinrichtung, einen Drucksensor zum Bestimmen eines von der Fluidfördereinrichtung erzeugten Drucks und eine Fluidverteilungseinrichtung mit zumindest einem mit der Fluidfördereinrichtung fluidverbundenen Eingangsanschluss und mit zumindest zwei mit dem Eingangsanschluss fluidverbundenen Ausgabeanschlüssen, wobei jeder Ausgabeanschluss zwischen einer Offenstellung und einer Schließstellung verstellbar ist, zumindest zwei jeweils über einen Leitungsstrang mit jeweils einem Ausgabeanschluss fluidverbundenen Reinigungseinrichtungen, und eine Steuerungseinrichtung aufweist, die mit der Fluidfördereinrichtung und der Fluidverteilungseinrichtung zum Übertragen und/oder Empfangen von Signalen datengekoppelt ist. Das erfindungsgemäße Verfahren weist folgende Verfahrensschritte auf:
- Ermitteln einer Reinigungsanforderung für zumindest zwei Reinigungseinrichtungen;
- Ermitteln einer ersten Soll-Flussrate für zumindest eine erste Reinigungseinrichtung;
- Einstellen der Ausgabeanschlüsse der Fluidverteilungseinrichtung in deren Offenstellung oder in deren Schließstellung entsprechend der Reinigungsanforderung;
- Ermitteln einer Leistungsstufe der Fluidfördereinrichtung;
- Ermitteln eines Ist-Fluiddrucks, der von der Fluidfördereinrichtung erzeugt wird;
- Bestimmen einer Ist-Gesamtflussrate, die von der Fluidfördereinrichtung gefördert wird, basierend auf dem ermittelten Ist-Fluiddruck und der ermittelten Leistungsstufe;
- Bestimmen einer ersten Ist-Flussrate durch den Ausgabeanschluss, an den die zumindest eine erste Reinigungseinrichtung angeschlossen ist, oder durch die zumindest eine erste Reinigungseinrichtung basierend auf der Ist-Gesamtflussrate und basierend auf der Reinigungsanforderung;
- Bestimmen eines Flussratenregelwertes basierend auf der ersten Soll-Flussrate und der ersten Ist-Flussrate; und
- Einstellen der Fluidfördereinrichtung derart, dass die von der Fluidfördereinrichtung bereitgestellte Ist-Gesamtflussrate um den Flussratenregelwert verändert wird, so dass sich die erste Ist-Flussrate der ersten Soll-Flussrate annähert.

Das erfindungsgemäße Verfahren weist den Vorteil auf, dass ein Reinigungssystem für Kraftfahrzeugkomponenten erheblich vereinfacht ausgestaltet sein kann. Insbesondere kann das Reinigungssystem eine erheblich verminderte Anzahl von Überwachungseinrichtungen zum Überwachen von Reinigungsdrücken und/oder Reinigungsmengen, die von den einzelnen Reinigungseinrichtungen des Reinigungssystems bereitgestellt werden müssen, um ein gefordertes Reinigungsergebnis zu gewährleisten, ermöglichen. Denn das Verfahren ermöglicht eine zentrale Bestimmung einer Ist-Gesamtflussrate an einer Stelle des Reinigungssystems, wobei die Reinigungsmengen bzw. die Flussrate an den jeweiligen Reinigungseinrichtungen berechnet werden. Ferner weist das erfindungsgemäße Verfahren den Vorteil auf, dass kein Durchflusssensor zur Bestimmung der Ist-Gesamtflussrate notwendig ist, wodurch das Reinigungssystem erheblich stabiler und somit weniger wartungsintensiv ist. Denn Durchflusssensoren weisen im Vergleich zu Drucksensoren erheblich mehr bewegliche Teile auf, die im Laufe der Zeit Verschleiß unterworfen sind.

Die Erfinder haben herausgefunden, dass überraschenderweise zur Bestimmung der Ist-Gesamtflussrate alleine die Leistungsstufe der Fluidfördereinrichtung nicht ausreichend ist. Denn die hydraulische Last im Reinigungssystem ist nicht konstant. Die Erfinder haben herausgefunden, dass überraschenderweise durch Bestimmung des von der Fluidfördereinrichtung erzeugten Ist-Fluiddrucks zusammen mit der Leistungsstufe der Fluidfördereinrichtung auf die Ist-Gesamtflussrate zurückgeschlossen werden kann.

Die Kraftfahrzeugkomponenten können beispielsweise als Kraftfahrzeugsensoren ausgebildet sein bzw. Kraftfahrzeugsensoren aufweisen, die wiederum beispielsweise optische Sensoren aufweisen können. Beispielsweise können die Kraftfahrzeugsensoren zumindest eine Kamera und/oder zumindest ein Lidar-Sensor aufweisen. Ferner können die Kraftfahrzeugsensoren einen Radar-Sensor aufweisen. Die Kraftfahrzeugkomponenten können auch als beispielsweise Windschutzscheiben, Heckscheiben, Scheinwerfer, Rückleuchten, Warnhinweisbeleuchtungen und/oder weitere Beleuchtungseinrichtungen ausgebildet sein oder diese aufweisen.

Die Fluidfördereinrichtung kann auch als Fluidpumpe oder einfach als Pumpe bezeichnet werden. Die Fluidfördereinrichtung weist zumindest einen Fluideingangsanschluss auf, über den die Fluidfördereinrichtung mit einem Reinigungsfluid versorgt wird. Beispielsweise ist die Fluidfördereinrichtung mittels des Fluideingangsanschlusses mit einem Reinigungsbehälter fluidverbunden, wobei in dem Reinigungsbehälter ein Reinigungsfluid einfüllbar ist. Die Fluidfördereinrichtung weist ferner zumindest einen Fluidausgabeanschluss auf, über den das Reinigungsfluid druckbeaufschlagt ausgegeben werden kann.

Die Fluidfördereinrichtung kann auch zwei oder mehr als zwei Fluidausgabeanschlüsse aufweisen, die vorzugsweise jeweils zwischen einer Offenstellung und einer Schließstellung verstellbar sind.

Die Fluidverteilungseinrichtung dient einer Verteilung des von der Fluidfördereinrichtung bereitgestellten Reinigungsfluids für die Reinigungseinrichtungen des Reinigungssystems. Die Fluidverteilungseinrichtung kann auch als Ventilblock bezeichnet werden.

In der Offenstellung eines Ausgabeanschlusses der Fluidverteilungseinrichtung ist eine Fluidförderung vom Eingangsanschluss der Fluidverteilungseinrichtung durch den betreffenden Ausgabeanschluss ermöglicht, wohingegen in der Schließstellung eines Ausgabeanschlusses eine Fluidförderung von dem Eingangsanschluss durch den betreffenden Ausgabeanschluss unterbunden ist. Vorzugsweise sind die jeweiligen Ausgabeanschlüsse diskret zwischen deren Offenstellung und deren Schließstellung verstellbar, d.h., dass in der Offenstellung eines Ausgabeanschlusses dieser komplett geöffnet ist, wohingegen in der Schließstellung eines Ausgabeanschlusses dieser komplett geschlossen ist.

Die Fluidverteilungseinrichtung weist vorzugsweise mehr als zwei Ausgabeanschlüsse auf. Beispielsweise weist die Fluidverteilungseinrichtung drei, vier, fünf, sechs oder mehr Ausgabeanschlüsse auf. Erfindungsgemäß bestehen hinsichtlich der Anzahl der Ausgabeanschlüsse keine Beschränkungen.

Die Reinigungseinrichtungen sind vorzugsweise als Reinigungsdüsen ausgebildet. Vorzugsweise weist das Reinigungssystem eine der Anzahl der Ausgabeanschlüsse entsprechende Anzahl von Reinigungseinrichtungen auf. Beispielsweise ist jeweils eine Reinigungseinrichtung an einem Ausgabeanschluss angeschlossen. Es ist jedoch auch möglich, dass mehr als eine Reinigungseinrichtung an einem Ausgabeanschluss angeschlossen ist. Beispielsweise können auch zwei oder mehr Reinigungseinrichtungen an einem Ausgabeanschluss angeschlossen sein. Weiter beispielsweise können zwei erste Reinigungseinrichtungen an einem Ausgabeanschluss angeschlossen sein, so dass die zwei ersten Reinigungseinrichtungen mit dem Ausgabeanschluss fluidverbunden sind.

Jede Reinigungseinrichtung kann über jeweils einen Leitungsstrang, der auch als Fluidleitung bezeichnet werden kann, mit einem Ausgabeanschluss der Fluidverteilungseinrichtung fluidverbunden sein. Beispielsweise kann eine erste Reinigungseinrichtung mittels eines ersten Leitungsstrangs mit einem ersten Ausgabeanschluss, eine zweite Reinigungseinrichtung mittels einem zweiten Leitungsstrangs mit einem zweiten Ausgabeanschluss usw. fluidverbunden sein.

Es ist auch möglich, dass mehr als eine Reinigungseinrichtung mit einem Ausgabeanschluss fluidverbunden ist.

Das Reinigungsfluid bzw. das Fluid ist vorzugsweise eine Flüssigkeit, beispielsweise Wasser und/oder eine Reinigungslösung. Folglich kann die Fluidfördereinrichtung auch als Flüssigkeitsfördereinrichtung bzw. als Flüssigkeitspumpe bezeichnet werden.

Die Steuerungseinrichtung ist vorzugsweise auch mit dem Drucksensor zum Übertragen und/oder Empfangen von Signalen datengekoppelt.

Vorzugsweise ist die Fluidfördereinrichtung mit dem Drucksensor zum Übertragen und/oder Empfangen von Signalen datengekoppelt.

Bei dem Verfahrensschritt der Ermittlung der Reinigungsanforderung für zumindest zwei Reinigungseinrichtungen werden Anforderungsinformationen ermittelt, welche Informationen enthalten, welche Ausgabeanschlüsse geöffnet werden sollen. D.h., dass die Anforderungsinformation Information darüber enthalten, welche der Kraftfahrzeugkomponenten zu reinigen sind. Ferner enthält die Reinigungsanforderung Informationen über die aus den jeweiligen Reinigungseinrichtungen auszugebende Fluidflussrate bzw. Soll-Flussrate und optional der Dauer, wie lange Reinigungsfluid aus den jeweiligen Reinigungseinrichtungen auszugeben ist. Beispielsweise wird die Reinigungsanforderung ermittelt, indem diese empfangen wird.

Vorzugsweise ist das Verfahren derart ausgebildet, dass beim Ermitteln einer Reinigungsanforderung für zumindest zwei Reinigungseinrichtungen eine Reinigungsanforderung für alle Reinigungseinrichtungen ermittelt wird.

Beispielsweise kann die Reinigungsanforderung Informationen enthalten, dass ein erster Kraftfahrzeugsensor mit Reinigungsfluid mit einer ersten Soll-Flussrate von 90 ml/s für eine Dauer von einer Sekunde, ein zweiter Kraftfahrzeugsensor mit keinem Reinigungsfluid und ein dritter Kraftfahrzeugsensor mit Reinigungsfluid mit einer dritten Soll-Flussrate von 75 ml/s für eine Dauer von zwei Sekunden beaufschlagt werden sollen.

Die Flussrate durch die Reinigungsdüse bestimmt automatisch den Druck an der Reinigungsdüse.

Bei dem Verfahrensschritt der Ermittlung einer ersten Soll-Flussrate für zumindest eine erste Reinigungseinrichtung wird diese erste Soll-Flussrate im Verlauf der iterativen Ausführung des Verfahrens erreicht. Das Ermitteln der ersten Soll-Flussrate kann durch Auslesen der Reinigungsanforderung erfolgen.

Bei dem Verfahrensschritt der Einstellung der Ausgabeanschlüsse der Fluidverteilungseinrichtung in deren Offenstellung oder in deren Schließstellung werden die Ausgabeanschlüsse vorzugsweise diskret in deren Offenstellung oder in deren Schließstellung überführt. Dies bedeutet, dass es vorzugsweise keine Zwischenstellungen der jeweiligen Ausgabeanschlüsse gibt. Wenn beispielsweise eine Reinigungsanforderung ermittelt wird, gemäß der ein erster Kraftfahrzeugsensor und ein dritter Kraftfahrzeugsensor, nicht jedoch ein zweiter Kraftfahrzeugsensor gereinigt werden sollen, werden der erste und der dritte Ausgabeanschluss in ihre jeweiligen Offenstellungen und der zweite Ausgabeanschluss in dessen Schließstellung überführt.

Die drei zuvor beschriebenen Verfahrensschritte werden vorzugsweise pro Reinigungsauftrag bzw. bis zur Beendigung eines Reinigungsauftrags einmalig ausgeführt. Es ist jedoch auch möglich, dass diese drei zuvor beschriebenen Verfahrensschritte pro Reinigungsauftrag mehrmalig ausgeführt werden. Die folgend beschriebenen Verfahrensschritte werden vorzugsweise sooft ausgeführt, bis eine Differenz der ersten Soll-Flussrate und der ersten Ist-Flussrate einen vorbestimmten Grenzwert unterschreiten.

Die Bestimmung der Ist-Gesamtflussrate erfolgt vorzugsweise mittels von dem Drucksensor bereitgestellten Druckinformationsdaten und mittels der die Leistungsstufe der Fluidfördereinrichtung repräsentierenden Daten. Die die Leistungsstufe der Fluidfördereinrichtung repräsentierenden Daten können beispielsweise die Drehzahl einer Pumpe umfassen.

Die Bestimmung der ersten Ist-Flussrate durch die erste Reinigungseinrichtung ist abhängig von der Ist-Gesamtflussrate, die von der Fluidfördereinrichtung bereitgestellt wird, und die sich auf die Reinigungseinrichtungen aufteilt, die einem sich in Offenstellung befindlichen Ausgabeanschluss der Fluidverteilungseinrichtung zugeordnet sind. Daher ist es möglich, die erste Ist-Flussrate durch die erste Reinigungseinrichtung basierend auf der Ist-Gesamtflussrate zu bestimmen.

Bei dem Verfahrensschritt der Bestimmung der ersten Ist-Flussrate durch die erste Reinigungseinrichtung kann zusätzlich noch zumindest eine weitere Flussrate durch zumindest eine weitere Reinigungseinrichtung basierend auf der Ist-Gesamtflussrate bestimmt werden.

Bei dem Verfahren kann ein erster Druckverlust in einem Leitungsstrang, über den die erste Reinigungseinrichtung mit der Fluidfördereinrichtung fluidverbunden ist, unter Berücksichtigung der ersten Ist-Flussrate bestimmt werden. Die Bestimmung des ersten Druckverlustes ist abhängig von der ersten Ist-Flussrate durch die erste Reinigungseinrichtung. Der Leitungsstrang, über den die erste Reinigungseinrichtung mit der Fluidfördereinrichtung, im Genaueren mit dem Fluidausgabeanschluss der Fluidfördereinrichtung fluidverbunden ist, weist beispielsweise eine Sammelfluidleitung von dem Fluidausgabeanschluss zu der Fluidverteilungseinrichtung, die Fluidverteilungseinrichtung, eine erste Fluidleitung, über die ein erster Ausgabeanschluss der Fluidverteilungseinrichtung mit der ersten Reinigungseinrichtung fluidverbunden ist, und die erste Fluidverteilungseinrichtung auf. Die Bestimmung des ersten Druckverlustes erfolgt vorzugsweise mittels einer Berechnung.

Im Verfahrensschritt zur Bestimmung bzw. Berechnung des Flussratenregelwertes wird der Flussratenwert ermittelt, den die Fluidfördereinrichtung erzeugen soll, damit Reinigungsfluid mit der ersten Soll-Flussrate aus der ersten Reinigungseinrichtung ausgegeben werden kann. Der Flussratenregelwert wird beispielsweise aus der Differenz der ersten Soll-Flussrate und der ersten Ist-Flussrate berechnet.

Bei dem Verfahrensschritt des Einstellens der Fluidfördereinrichtung derart, dass eine von der Fluidfördereinrichtung bereitgestellte Ist-Gesamtflussrate um den Flussratenregelwert verändert wird, so dass sich die erste Ist-Flussrate der ersten Soll-Flussrate annähert, wird eine Leistungsstufe der Fluidfördereinrichtung entsprechend angepasst. Die Leistungsstufe der Fluidfördereinrichtung kann beispielsweise eine Drehzahl der Fluidfördereinrichtung sein.

Die Leistungsstufe der Fluidfördereinrichtung kann beispielsweise eine Drehzahl der Fluidfördereinrichtung sein. Bei bestimmten Fluidfördereinrichtungen ist eine Drehzahl der Fluidfördereinrichtung proportional zu der mittels der Fluidfördereinrichtung förderbaren Fluidflussrate.

Vorzugsweise ist das Verfahren derart ausgebildet, dass der Verfahrensschritt des Bestimmens der ersten Ist-Flussrate durch die erste Reinigungseinrichtung auch basierend auf Schaltstellungen der Ausgabeanschlüsse der Fluidverteilungseinrichtung erfolgt.

Das entsprechend ausgebildete Verfahren weist den Vorteil auf, dass die erste Ist-Flussrate durch die erste Reinigungseinrichtung mit erhöhter Genauigkeit bestimmt wird. Somit ist die Regelgenauigkeit des entsprechend ausgebildeten Verfahrens erheblich verbessert.

Das von der Fluidfördereinrichtung geförderte Reinigungsfluid teilt sich auf die Leitungsstränge auf, in denen die diesen Leitungssträngen zugeordneten Ausgabeanschlüsse der Fluidverteilungseinrichtung sich in deren jeweiligen Offenstellungen befinden. Dabei teilt sich die Ist-Gesamtflussrate entsprechend der Strömungswiderstände der sich flussabwärts der Ausgabeanschlüsse befindlichen Leitungsstränge auf. Wenn beispielsweise ein Strömungswiderstand eines der ersten Reinigungseinrichtung zugeordneten Leitungsstrangs kleiner ist als ein Strömungswiderstand eines der dritten Reinigungseinrichtung zugeordneten Leitungsstrangs, dann wird ein Reinigungsfluidstrom durch den der ersten Reinigungseinrichtung zugeordneten Leitungsstrang größer sein als eine Flussrate des Reinigungsfluidstroms durch den der dritten Reinigungseinrichtung zugeordneten Leitungsstrang.

Vorzugsweise ist das Verfahren derart ausgebildet, dass der Verfahrensschritt des Bestimmens der ersten Ist-Flussrate auch basierend auf einer ersten Umsetzungstabelle erfolgt, die die Verhältnisse der Flussraten durch die den jeweiligen Reinigungseinrichtungen zugeordneten Leitungspfaden in Abhängigkeit von Ist-Gesamtflussraten angibt, die von der Fluidfördereinrichtung bereitgestellt werden.

Das entsprechend ausgebildete Verfahren weist den Vorteil auf, dass die Flussrate durch die erste Reinigungseinrichtung mit einem reduzierten Rechenaufwand bestimmt wird. Denn die erste Umsetzungstabelle, die auch als erste Look-Up-Tabelle bezeichnet werden kann, ist vorzugsweise in der Steuerungseinrichtung oder in einem anderen elektronischen Speicher gespeichert, so dass die Verhältnisse der Flussraten nicht immer bei jedem Iterationsschritt des Verfahrens neu berechnet werden muss.

In der ersten Umsetzungstabelle sind für eine Vielzahl von Ist-Gesamtflussraten, die von der Fluidfördereinrichtung bereitgestellt werden, die Verhältnisse der Flussraten durch die den jeweiligen Reinigungseinrichtungen zugeordneten Leitungspfaden angegeben. Dabei sind diese Verhältnisse der Flussraten durch die den jeweiligen Reinigungseinrichtungen zugeordneten Leitungspfaden vorzugsweise auf einen Leitungspfad normiert, der unter sämtlichen Leitungspfaden die kleinste Flussrate bei einer vorgegebenen Ist-Gesamtflussrate aufweist. Dieser Leitungspfad wird vorzugsweise auf 1 normiert, so dass die Flussraten durch die anderen Leitungspfade entsprechend jeweils größer als 1 sind.

Nachfolgend ist ein Beispiel einer entsprechenden ersten Umsetzungstabelle angegeben:

| Ist-Gesamtflussrate | Fluss durch erste Reinigungseinrichtung | Fluss durch zweite Reinigungseinrichtung | Fluss durch dritte Reinigungseinrichtung |
|---|---|---|---|
| 30 ml/s | 2.54 | 1.68 | 1 (Referenz) |
| 60 ml/s | 2.7 | 1.75 | 1 (Referenz) |
| 120 ml/s | 2.8 | 1.85 | 1 (Referenz) |
| 180 ml/s | 2.9 | 1.9 | 1 (Referenz) |

Gemäß dieser beispielhaften ersten Umsetzungstabelle fließt bei einer von der Fluidfördereinrichtung erzeugten Ist-Gesamtflussrate von 120 ml/s durch die erste Reinigungseinrichtung 2.8 mal so viel Reinigungsfluid wie durch die dritte Reinigungseinrichtung. Durch die zweite Reinigungseinrichtung fließt 1.85 mal so viel Reinigungsfluid wie durch die dritte Reinigungseinrichtung.

Vorzugsweise ist das Verfahren derart ausgebildet, dass der Verfahrensschritt des Bestimmens der ersten Ist-Flussrate basierend auf zumindest einer zweiten Umsetzungstabelle erfolgt, wobei in einer zweiten Umsetzungstabelle die prozentualen Flussraten durch die den jeweiligen Reinigungseinrichtungen zugeordneten Leitungspfaden für alle Permutationen von Schaltstellungen sämtlicher Ausgabeanschlüsse der Fluidverteilungseinrichtung für eine von der Fluidfördereinrichtung bereitgestellte Ist-Gesamtflussrate angegeben sind.

Das entsprechend ausgebildete Verfahren weist den Vorteil auf, dass die Flussrate durch die erste Reinigungseinrichtung mit einem reduzierten Rechenaufwand bestimmt wird. Denn die zweite Umsetzungstabelle, die auch als zweite Look-Up-Tabelle bezeichnet werden kann, ist vorzugsweise in der Steuerungseinrichtung oder in einem anderen elektronischen Speicher gespeichert, so dass die Verhältnisse der Flussraten nicht immer bei jedem Iterationsschritt des Verfahrens neu berechnet werden muss.

Vorzugsweise sind für eine Vielzahl von der Fluidfördereinrichtung bereitgestellten Ist-Gesamtflussraten jeweils eine zweite Umsetzungstabelle vorhanden und in der Steuerungseinrichtung oder in einem anderen elektronischen Speicher gespeichert.

Für jede Permutation der Schaltstellungen sämtlicher Ausgabeanschlüsse der Fluidverteilungseinrichtung beträgt die Summe der der prozentualen Flussraten durch die den jeweiligen Reinigungseinrichtungen zugeordneten Leitungspfaden stets 100% der Ist-Gesamtflussrate, die von der Fluidfördereinrichtung gefördert wird.

Sowohl die erste Umsetzungstabelle als auch sämtliche zweiten Umsetzungstabellen können über eine Computersimulation ermittelt werden, wenn das Reinigungssystem digitalisiert ist. Ferner ist es auch möglich, dass die erste Umsetzungstabelle als auch sämtliche zweite Umsetzungstabellen über Vormessungen an dem konkreten Reinigungssystem ermittelt werden.

Nachfolgend ist ein Beispiel einer entsprechenden zweiten Umsetzungstabelle für eine Ist-Gesamtflussrate von 90 ml/s angegeben:

| erster Ausgabeanschluss | zweiter Ausgabeanschluss | dritter Ausgabeanschluss |
|---|---|---|
| 0 | 0 | 100 |
| 0 | 100 | 0 |
| 0 | 66 | 33 |
| 100 | 0 | 0 |
| 80 | 0 | 20 |
| 66 | 33 | 0 |
| 57.1 | 28.6 | 14.3 |

Gemäß dieser beispielhaften zweiten Umsetzungstabelle fließt beispielsweise bei einer von der Fluidfördereinrichtung erzeugten Ist-Gesamtflussrate von 90 ml/s bei sich in Schließstellung befindlichen ersten und zweiten Ausgabeanschluss und geöffnetem dritten Ausgabeanschluss 100% des Gesamtfluidstroms durch den dritten Ausgabeanschluss (erste Zeile der zweiten Umsetzungstabelle entsprechend einer ersten Schaltpermutation) .

Gemäß der dritten Zeile (entsprechend einer dritten Schaltpermutation) der obigen zweiten Umsetzungstabelle fließen bei sich in Schließstellung befindlichem ersten Ausgabeanschluss und sich jeweils in Offenstellung befindlichen zweiten und dritten Ausgabeanschlüssen 66% des Gesamtfluidstroms durch den zweiten Ausgabeanschluss und 33% durch den dritten Ausgabeanschluss.

Gemäß der siebten Zeile (entsprechend einer siebten Schaltpermutation) der obigen zweiten Umsetzungstabelle fließen sich jeweils in Offenstellung befindlichen ersten, zweiten und dritten Ausgabeanschlüssen 57.1 % des Gesamtfluidstroms durch den ersten Ausgabeanschluss, 28.6% des Gesamtfluidstroms durch den zweiten Ausgabeanschluss und 14.3% durch den dritten Ausgabeanschluss.

Vorzugsweise ist das Verfahren derart ausgebildet, dass bei dem Verfahrensschritt des Ermittelns von zumindest einer ersten Soll-Flussrate für zumindest eine erste Reinigungseinrichtung zusätzlich zumindest eine weitere Soll-Flussrate für zumindest eine zweite Reinigungseinrichtung ermittelt wird und ein basierend auf diesen ermittelten Soll-Flussraten berechneter Wert als Soll-Flussrate übernommen wird.

Das entsprechend ausgebildete Verfahren weist den Vorteil auf, dass bei einer Reinigungsanfrage für mehr als eine Kraftfahrzeugkomponente zumindest zwei der Kraftfahrzeugkomponenten mit einem zumindest annähernd den jeweiligen Soll-Flussraten entsprechenden Fluidflussraten mit dem Reinigungsfluid beaufschlagt werden, so dass ein Reinigungsergebnis für eine Mehrzahl von Kraftfahrzeugkomponenten verbessert ist.

Beispielsweise wird der auf den ermittelten Soll-Flussraten basierende Wert, der als Soll-Flussrate übernommen wird, dadurch berechnet, indem der Mittelwert der ermittelten Soll-Flussraten berechnet wird.

Die der vorliegenden Erfindung zugrundeliegende Aufgabe wird ferner gemäß eines zweiten Aspekts durch ein Verfahren mit den Merkmalen von Anspruch 6 gelöst. Ausgestaltungen des Verfahrens sind in den von Anspruch 6 abhängigen Ansprüchen beschrieben.

Im Genaueren wird die der vorliegenden Erfindung zugrundeliegende Aufgabe durch ein Verfahren zum Regeln eines Reinigungssystems für Kraftfahrzeugkomponenten gelöst, wobei das Reinigungssystem eine Fluidfördereinrichtung, einen Drucksensor zum Bestimmen eines von der Fluidfördereinrichtung erzeugten Drucks und eine Fluidverteilungseinrichtung mit zumindest einem mit der Fluidfördereinrichtung fluidverbundenen Eingangsanschluss und mit zumindest zwei mit dem Eingangsanschluss fluidverbundenen Ausgabeanschlüssen, wobei jeder Ausgabeanschluss zwischen einer Offenstellung und einer Schließstellung verstellbar ist, zumindest zwei jeweils über einen Leitungsstrang mit jeweils einem Ausgabeanschluss fluidverbundenen Reinigungseinrichtungen, und eine Steuerungseinrichtung aufweist, die mit der Fluidfördereinrichtung und der Fluidverteilungseinrichtung zum Übertragen und/oder Empfangen von Signalen datengekoppelt ist. Das erfindungsgemäße Verfahren weist folgende Verfahrensschritte auf:
- Ermitteln einer Reinigungsanforderung für zumindest zwei, vorzugsweise für alle Reinigungseinrichtungen;
- Ermitteln von jeweiligen Soll-Flussraten für jede Reinigungseinrichtung;
- Einstellen der Ausgabeanschlüsse der Fluidverteilungseinrichtung in deren Offenstellung oder in deren Schließstellung entsprechend der Reinigungsanforderung;
- Ermitteln einer Leistungsstufe der Fluidfördereinrichtung;
- Ermitteln eines Ist-Fluiddrucks, der von der Fluidfördereinrichtung erzeugt wird;
- Bestimmen einer Ist-Gesamtflussrate, die von der Fluidfördereinrichtung gefördert wird, basierend auf dem ermittelten Ist-Fluiddruck und der ermittelten Leistungsstufe;
- Bestimmen einer Soll-Gesamtflussrate durch die Reinigungseinrichtungen basierend auf der Reinigungsanforderung;
- Bestimmen eines Flussratenregelwertes basierend auf der Soll-Gesamtflussrate und der Ist-Gesamtflussrate; und
- Einstellen der Fluidfördereinrichtung derart, dass die von der Fluidfördereinrichtung bereitgestellte Ist-Gesamtflussrate um den Flussratenregelwert verändert wird, so dass sich die Ist-Gesamtflussrate der Soll-Gesamtflussrate annähert.

Das erfindungsgemäße Verfahren weist den Vorteil auf, dass ein Reinigungssystem für Kraftfahrzeugkomponenten erheblich vereinfacht ausgestaltet sein kann. Insbesondere kann das Reinigungssystem eine erheblich verminderte Anzahl von Überwachungseinrichtungen zum Überwachen von Reinigungsdrücken und/oder Reinigungsmengen, die von den einzelnen Reinigungseinrichtungen des Reinigungssystems bereitgestellt werden müssen, um ein gefordertes Reinigungsergebnis zu gewährleisten, ermöglichen. Denn das Verfahren ermöglicht eine zentrale Bestimmung einer Ist-Gesamtflussrate an einer Stelle des Reinigungssystems. Ferner weist das erfindungsgemäße Verfahren den Vorteil auf, dass kein Durchflusssensor zur Bestimmung der Ist-Gesamtflussrate notwendig ist, wodurch das Reinigungssystem erheblich stabiler und somit weniger wartungsintensiv ist. Denn Durchflusssensoren weisen im Vergleich zu Drucksensoren erheblich mehr bewegliche Teile auf, die im Laufe der Zeit Verschleiß unterworfen sind.

Die Erfinder haben herausgefunden, dass überraschenderweise zur Bestimmung der Ist-Gesamtflussrate alleine die Leistungsstufe der Fluidfördereinrichtung nicht ausreichend ist. Denn die hydraulische Last im Reinigungssystem ist nicht konstant. Die Erfinder haben herausgefunden, dass überraschenderweise durch Bestimmung des von der Fluidfördereinrichtung erzeugten Ist-Fluiddrucks zusammen mit der Leistungsstufe der Fluidfördereinrichtung auf die Ist-Gesamtflussrate zurückgeschlossen werden kann.

Es sei ausdrücklich darauf hingewiesen, dass der Gegenstand des zweiten Aspekts mit dem Gegenstand des ersten Aspekts der Erfindung vorteilhaft kombinierbar ist, und zwar sowohl einzeln oder in beliebiger Kombination kumulativ. Folglich wird auf die obigen Ausführungen verwiesen.

Bei dem Verfahrensschritt der Ermittlung der Reinigungsanforderung für alle Reinigungseinrichtungen werden Anforderungsinformationen ermittelt, welche Informationen enthalten, welche Ausgabeanschlüsse geöffnet werden sollen. D.h., dass die Anforderungsinformation Information darüber enthalten, welche der Kraftfahrzeugkomponenten zu reinigen sind. Ferner enthält die Reinigungsanforderung Informationen über die aus den jeweiligen Reinigungseinrichtungen auszugebende Fluidflussrate bzw. Soll-Flussrate und optional der Dauer, wie lange Reinigungsfluid aus den jeweiligen Reinigungseinrichtungen auszugeben ist. Beispielsweise wird die Reinigungsanforderung ermittelt, indem diese empfangen wird.

Bei dem Verfahrensschritt der Ermittlung einer Soll-Gesamtflussrate wird diese Soll-Gesamtflussrate im Verlauf der iterativen Ausführung des Verfahrens erreicht. Das Ermitteln Soll-Gesamtflussrate kann durch Auslesen der Reinigungsanforderung erfolgen.

Bei dem Verfahrensschritt des Einstellens der Fluidfördereinrichtung derart, dass eine von der Fluidfördereinrichtung bereitgestellte Ist-Gesamtflussrate um den Flussratenregelwert verändert wird, so dass sich die Ist-Gesamtflussrate der Soll-Gesamtflussrate annähert, wird eine Leistungsstufe der Fluidfördereinrichtung entsprechend angepasst. Die Leistungsstufe der Fluidfördereinrichtung kann beispielsweise eine Drehzahl der Fluidfördereinrichtung sein.

Vorzugsweise ist das Verfahren derart ausgebildet, dass der Verfahrensschritt des Bestimmens einer Ist-Gesamtflussrate, die von der Fluidfördereinrichtung gefördert wird, unter Verwendung eines Kennfeldes der Fluidfördereinrichtung erfolgt, das für unterschiedliche Leistungsstufen der Fluidfördereinrichtung die von der Fluidfördereinrichtung erzielbare Ist-Gesamtflussrate in Abhängigkeit des Fluiddrucks angibt.

Das entsprechend ausgebildete Verfahren weist den Vorteil auf, dass die von Fluidfördereinrichtung geförderte Ist-Gesamtflussrate mit einer verbesserten Genauigkeit und schneller bestimmt werden kann.

Der vorliegenden Erfindung liegt ferner die Aufgabe zugrunde, ein Reinigungssystem bereitzustellen, welches weniger fehleranfällig und weniger kostenintensiv ist.

Diese der vorliegenden Erfindung zugrundeliegende Aufgabe wird durch ein Reinigungssystem mit den Merkmalen von Anspruch 8 gelöst.

Im Genaueren wird diese der vorliegenden Aufgabe zugrundeliegende Aufgabe durch ein Reinigungssystem gelöst, das eine Fluidfördereinrichtung, einen Drucksensor zum Bestimmen eines von der Fluidfördereinrichtung erzeugten Drucks und eine Fluidverteilungseinrichtung mit zumindest einem mit der Fluidfördereinrichtung fluidverbundenen Eingangsanschluss und mit zumindest zwei mit dem Eingangsanschluss fluidverbundenen Ausgabeanschlüssen, wobei jeder Ausgabeanschluss zwischen einer Offenstellung und einer Schließstellung verstellbar ist, zumindest zwei jeweils über einen Leitungsstrang mit jeweils einem Ausgabeanschluss fluidverbundenen Reinigungseinrichtungen, und eine Steuerungseinrichtung aufweist, die mit der Fluidfördereinrichtung und der Fluidverteilungseinrichtung zum Übertragen und/oder Empfangen von Signalen datengekoppelt ist. Das erfindungsgemäße Reinigungssystem ist dadurch gekennzeichnet, das die Steuerungseinrichtung dazu ausgebildet ist, eines der oben beschriebenen Verfahren auszuführen.

Das erfindungsgemäße Reinigungssystem weist den Vorteil auf, dass dieses eine verminderte Anzahl von Bauteilen aufweist und somit vereinfacht ausgestaltet ist. Im Genaueren weist das erfindungsgemäße Reinigungssystem eine erheblich verminderte Anzahl von Überwachungseinrichtungen zum Überwachen von Reinigungsmengen auf, die von den einzelnen Reinigungseinrichtungen des Reinigungssystems bereitgestellt werden müssen, um ein gefordertes Reinigungsergebnis zu gewährleisten. Somit ist das erfindungsgemäße Reinigungssystem weniger fehleranfällig und weniger kostenintensiv.

Die Kraftfahrzeugkomponenten können beispielsweise als Kraftfahrzeugsensoren ausgebildet sein bzw. Kraftfahrzeugsensoren aufweisen, die wiederum beispielsweise optische Sensoren aufweisen können. Beispielsweise können die Kraftfahrzeugsensoren zumindest eine Kamera und/oder zumindest ein Lidar-Sensor aufweisen. Ferner können die Kraftfahrzeugsensoren einen Radar-Sensor aufweisen. Die Kraftfahrzeugkomponenten können auch als beispielsweise Windschutzscheiben, Heckscheiben, Scheinwerfern, Rückleuchten, Warnhinweisbeleuchtungen und/oder weitere Beleuchtungseinrichtungen ausgebildet sein oder diese aufweisen.

Die Fluidfördereinrichtung kann auch als Fluidpumpe oder einfach als Pumpe bezeichnet werden. Die Fluidfördereinrichtung weist zumindest einen Fluideingangsanschluss auf, über den die Fluidfördereinrichtung mit einem Reinigungsfluid versorgt wird. Beispielsweise ist die Fluidfördereinrichtung mittels des Fluideingangsanschlusses mit einem Reinigungsbehälter fluidverbunden, wobei in dem Reinigungsbehälter ein Reinigungsfluid einfüllbar ist. Die Fluidfördereinrichtung weist ferner zumindest einen Fluidausgabeanschluss auf, über den das Reinigungsfluid druckbeaufschlagt ausgegeben werden kann.

Die Fluidfördereinrichtung kann auch zwei oder mehr als zwei Fluidausgabeanschlüsse aufweisen, die vorzugsweise jeweils zwischen einer Offenstellung und einer Schließstellung verstellbar sind.

Die Fluidverteilungseinrichtung dient einer Verteilung des von der Fluidfördereinrichtung bereitgestellten Reinigungsfluids für die Reinigungseinrichtungen des Reinigungssystems. Die Fluidverteilungseinrichtung kann auch als Ventilblock bezeichnet werden.

In der Offenstellung eines Ausgabeanschlusses der Fluidverteilungseinrichtung ist eine Fluidförderung vom Eingangsanschluss der Fluidverteilungseinrichtung durch den betreffenden Ausgabeanschluss ermöglicht, wohingegen in der Schließstellung eines Ausgabeanschlusses eine Fluidförderung von dem Eingangsanschluss durch den betreffenden Ausgabeanschluss unterbunden ist. Vorzugsweise sind die jeweiligen Ausgabeanschlüsse diskret zwischen deren Offenstellung und deren Schließstellung verstellbar, d.h., dass in der Offenstellung eines Ausgabeanschlusses dieser komplett geöffnet ist, wohingegen in der Schließstellung eines Ausgabeanschlusses dieser komplett geschlossen ist.

Die Fluidverteilungseinrichtung weist vorzugsweise mehr als zwei Ausgabeanschlüsse auf. Beispielsweise weist die Fluidverteilungseinrichtung drei, vier, fünf, sechs oder mehr Ausgabeanschlüsse auf. Erfindungsgemäß bestehen hinsichtlich der Anzahl der Ausgabeanschlüsse keine Beschränkungen.

Die Reinigungseinrichtungen sind vorzugsweise als Reinigungsdüsen ausgebildet. Vorzugsweise weist das Reinigungssystem eine der Anzahl der Ausgabeanschlüsse entsprechende Anzahl von Reinigungseinrichtungen auf. Bei einer beispielsweise als Windschutzscheide ausgebildeten Kraftfahrzeugkomponente werden mehrere Reinigungseinrichtungen mit einem Ausgabeanschluss fluidverbunden. Es ist auch allgemein möglich, dass mehr als eine Reinigungseinrichtung mit einem Ausgabeanschluss fluidverbunden ist.

Jede Reinigungseinrichtung kann über jeweils einen Leitungsstrang, der auch als Fluidleitung bezeichnet werden kann, mit einem Ausgabeanschluss der Fluidverteilungseinrichtung fluidverbunden sein. Beispielsweise kann eine erste Reinigungseinrichtung mittels eines ersten Leitungsstrangs mit einem ersten Ausgabeanschluss, eine zweite Reinigungseinrichtung mittels einem zweiten Leitungsstrangs mit einem zweiten Ausgabeanschluss usw. fluidverbunden sein.

Das Reinigungsfluid bzw. das Fluid ist vorzugsweise eine Flüssigkeit, beispielsweise Wasser und/oder eine Reinigungslösung. Folglich kann die Fluidfördereinrichtung auch als Flüssigkeitsfördereinrichtung bzw. als Flüssigkeitspumpe bezeichnet werden.

Die Steuerungseinrichtung ist vorzugsweise auch mit dem Drucksensor zum Übertragen und/oder Empfangen von Signalen datengekoppelt.

Vorzugsweise ist die Fluidfördereinrichtung mit dem Drucksensor zum Übertragen und/oder Empfangen von Signalen datengekoppelt.

Vorzugsweise ist die Steuerungseinrichtung als Teil der Fluidfördereinrichtung ausgebildet und/oder in dieser integriert.

Der vorliegenden Erfindung liegt ferner die Aufgabe zugrunde, ein Kraftfahrzeug bereitzustellen, das eine verbesserte Reinigung von Kraftfahrzeugkomponenten bei gleichzeitiger Reduktion von Bauteilen ermöglicht.

Diese der vorliegenden Erfindung zugrundeliegende Aufgabe wird durch ein Kraftfahrzeug mit den Merkmalen von Anspruch 9 gelöst.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung des erfindungsgemäßen Reinigungssystems;
- Figur 2:: eine schematische Darstellung eines Reinigungssystems gemäß einer weiteren Ausführungsform der vorliegenden Erfindung;
- Figur 3:: ein Flussablaufdiagramm eines erfindungsgemäßen Verfahrens zum Regeln von in den Figuren 1 und 2 dargestellten Reinigungssystemen;
- Figur 4:: ein Kennfeld der Fluidfördereinrichtung, das für unterschiedliche Leistungsstufen einer Fluidfördereinrichtung die von der Fluidfördereinrichtung erzielbare Gesamtflussrate in Abhängigkeit des Fluiddrucks angibt; und
- Figur 5:: ein Flussablaufdiagramm eines Verfahrens zum Regeln von in den Figuren 1 und 2 dargestellten Reinigungssystemen gemäß einer weiteren Ausführungsform der vorliegenden Erfindung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

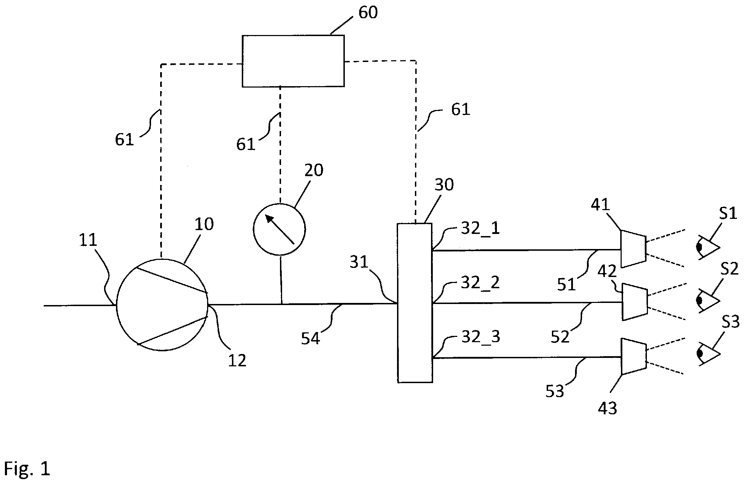

Figur 1 zeigt eine schematische Darstellung eines erfindungsgemäßen Reinigungssystems für Kraftfahrzeugkomponenten S1, S2, S3, die in den folgend beschriebenen Ausführungsbeispielen als Kraftfahrzeugsensoren S1, S2, S3 ausgebildet sind. Jedoch ist die vorliegende Erfindung nicht darauf beschränkt, dass die Kraftfahrzeugkomponenten als Kraftfahrzeugsensoren ausgebildet sind oder diese aufweisen. Die Kraftfahrzeugkomponenten können auch als Windschutzscheiben, Heckscheiben, Scheinwerfer, Rückleuchten, Warnhinweisbeleuchtungen und/oder allgemein als Beleuchtungseinrichtungen ausgebildet sein oder diese aufweisen. Die Kraftfahrzeugsensoren S1, S2, S3 können beispielsweise optische Sensoren aufweisen. Beispielsweise können die Kraftfahrzeugsensoren S1, S2, S3 zumindest eine Kamera und/oder zumindest ein Lidar-Sensor aufweisen. Ferner können die Kraftfahrzeugsensoren S1, S2, S3 einen Radar-Sensor aufweisen. In dem dargestellten Ausführungsbeispiel weist das Reinigungssystem 3 Kraftfahrzeugsensoren S1, S2, S3 auf, jedoch ist die vorliegende Erfindung nicht auf diese Anzahl von Kraftfahrzeugsensoren beschränkt. Das erfindungsgemäße Reinigungssystem kann zwei oder mehr (beispielsweise vier, fünf, sechs, oder mehr) Kraftfahrzeugsensoren aufweisen.

Das Reinigungssystem weist eine Fluidfördereinrichtung 10 auf, die auch als auch als Fluidpumpe 10 oder einfach als Pumpe 10 bezeichnet werden kann. Die Fluidfördereinrichtung 10 weist zumindest einen Fluideingangsanschluss 11 auf, über den die Fluidfördereinrichtung 10 mit einem Reinigungsfluid versorgt wird. Beispielsweise ist die Fluidfördereinrichtung 10 mittels des Fluideingangsanschlusses 11 mit einem in den Figuren nicht dargestellten Reinigungsbehälter fluidverbunden, wobei in dem Reinigungsbehälter ein Reinigungsfluid einfüllbar ist. Die Fluidfördereinrichtung 10 weist ferner zumindest einen Fluidausgabeanschluss 12 auf, über den das Reinigungsfluid druckbeaufschlagt ausgegeben werden kann.

Das Reinigungssystem weist ferner eine Fluidverteilungseinrichtung 30 mit zumindest einem mit der Fluidfördereinrichtung 10 fluidverbundenen Eingangsanschluss 31 auf, wobei der Eingangsanschluss 31 der der Fluidverteilungseinrichtung 30 mit dem Fluidausgabeanschluss 12 der Fluidfördereinrichtung 12 mittels einer Sammelfluidleitung 54 fluidverbunden ist. Die Fluidverteilungseinrichtung 30 weist ferner zumindest zwei mit dem Eingangsanschluss 31 fluidverbundenen Ausgabeanschlüssen 32_1, 32_2, 32_3 auf. In dem dargestellten Ausführungsbeispiel weist die Fluidverteilungseinrichtung 30, die auch als Ventilblock 30 bezeichnet werden kann, drei Ausgabeanschlüsse 32_1, 32_2, 32_3 auf. Jedoch kann die Fluidverteilungseinrichtung 30 auch mehr als drei Ausgabeanschlüsse aufweisen. Jeder der Ausgabeanschlüsse 32_1, 32_2, 32_3 ist zwischen einer Offenstellung und einer Schließstellung verstellbar. In der Offenstellung eines Ausgabeanschlusses 32_1, 32_2, 32_3 ist eine Fluidförderung vom Eingangsanschluss 31 der Fluidverteilungseinrichtung 30 durch den betreffenden Ausgabeanschluss 32_1, 32_2, 32_3 ermöglicht, wohingegen in der Schließstellung eines Ausgabeanschlusses 32_1, 32_2, 32_3 eine Fluidförderung von dem Eingangsanschluss 31 durch den betreffenden Ausgabeanschluss 32_1, 32_2, 32_3 unterbunden ist.

Das Reinigungssystem weist ferner einen Drucksensor 20 zum Bestimmen einer von der Fluidfördereinrichtung 10 erzeugten Drucks auf.

Weiterhin weist das Reinigungssystem zumindest zwei jeweils über eine Fluidleitung 51, 52, 53 mit jeweils einem Ausgabeanschluss 32_1, 32_2, 32_3 fluidverbundenen Reinigungseinrichtungen 41, 42, 43 auf. In dem dargestellten Ausführungsbeispiel weist das Reinigungssystem drei Reinigungseinrichtungen 41, 42, 43 auf, jedoch kann das Reinigungssystem auch mehr als drei (beispielsweise vier, fünf, sechs oder mehr) Reinigungseinrichtungen 41, 42, 43 aufweisen. Die Reinigungseinrichtungen 41, 42, 43 sind in dem dargestellten Ausführungsbeispiel als Reinigungsdüsen 41, 42, 42 ausgebildet. Die Reinigungseinrichtungen 41, 42, 43 sind dazu ausgebildet, das von der Fluidfördereinrichtung 10 geförderte Reinigungsfluid auf die Kraftfahrzeugsensoren S1, S2, S3 auszugeben bzw. zu sprühen. Dabei ist in dem dargestellten Ausführungsbeispiel jeweils eine Reinigungseinrichtung 41, 42, 43 einem Kraftfahrzeugsensor S1, S2, S3 zugeordnet.

Ferner weist das Reinigungssystem eine Steuerungseinrichtung 60 auf, die jeweils über eine Datenleitung 61 bzw. Signalleitung 61 mit der Fluidfördereinrichtung 10, dem Drucksensor 20 und der Fluidverteilungseinrichtung 30 zum Übertragen und/oder Empfangen von Signalen datengekoppelt ist. Die Steuerungseinrichtung 60 ist dazu ausgebildet, von dem Drucksensor 20 ermittelte Daten zu empfangen. Ferner ist die Steuerungseinrichtung 60 dazu ausgebildet, von der Fluidfördereinrichtung 10 übermittelte Daten, die die Leistungsstufe der Fluidfördereinrichtung 10 repräsentieren, zu empfangen. Ferner ist die Steuerungseinrichtung 60 dazu ausgebildet, Steuerungssignale an die Fluidfördereinrichtung 10 zum Einstellen der Leistungsstufe der Fluidfördereinrichtung 10 zu übertragen. Weiterhin ist die Steuerungseinrichtung 60 dazu ausgebildet, von der Fluidverteilungseinrichtung 30 übermittelte Daten, die die Schaltstellungen der Ausgabeanschlüsse 32_1, 32_2, 32_3 repräsentieren, zu empfangen. Ferner ist die Steuerungseinrichtung 60 dazu ausgebildet, Steuerungssignale an die Fluidverteilungseinrichtung 30 zum Verstellen der Schaltstellungen der Ausgabeanschlüsse 32_1, 32_2, 32_3 zu übertragen.

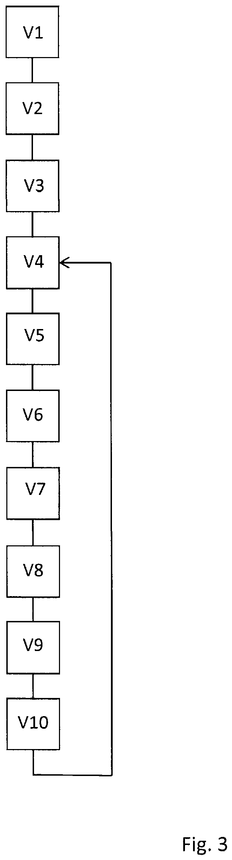

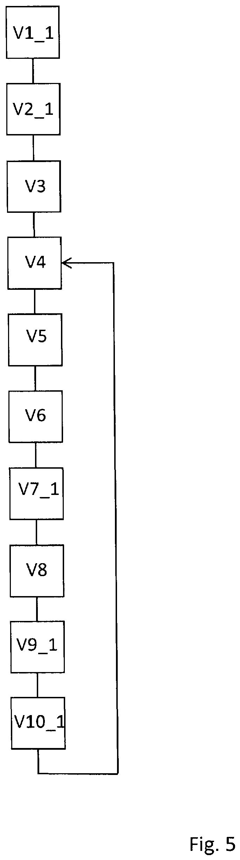

Die Steuerungseinrichtung 60 ist dazu ausgebildet, die in Figur 3 oder die in Figur 5 dargestellten und nachfolgend beschrieben Verfahrensschritte auszuführen.

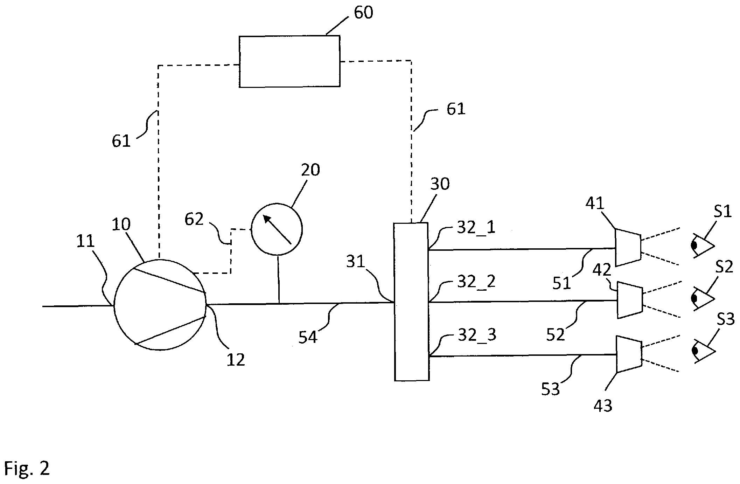

Figur 2 zeigt eine schematische Darstellung eines Reinigungssystems gemäß einer weiteren Ausführungsform der vorliegenden Erfindung. Das in Figur 2 dargestellte Reinigungssystem entspricht dabei im Wesentlichen dem in Figur 1 dargestellten Reinigungssystem mit der Ausnahme, dass die Steuerungseinrichtung 60 lediglich mit der Fluidfördereinrichtung 10 und mit der Fluidverteilungseinrichtung 30 über Datenleitungen 61 zum Übertragen und/oder Empfangen von Signalen nicht jedoch mit dem Drucksensor 20 datengekoppelt ist. Hingegen ist bei dem in Figur 2 dargestellten Reinigungssystem die Fluidfördereinrichtung 10 mittels einer Datenleitung bzw. Signalleitung 62 mit dem Drucksensor 20 zum Übertragen und/oder Empfangen von Signalen datengekoppelt. Die Fluidfördereinrichtung 10 ist dazu ausgebildet, von dem Drucksensor 20 ermittelte Daten zu empfangen.

Der übrige Aufbau des in Figur 2 dargestellten Reinigungssystems entspricht dem des in Figur 1 dargestellten Reinigungssystems, so dass zwecks Vermeidung von Wiederholungen auf die obige Beschreibung verwiesen wird.

Die Steuerungseinrichtung 60 und/oder die Fluidfördereinrichtung 10 sind dazu ausgebildet, die in Figur 3 oder die in Figur 5 dargestellten und nachfolgend beschriebenen Verfahrensschritte auszuführen.

Wie bereits oben angegeben zeigt Figur 3 das Flussablaufdiagramm ein Verfahren zum Regeln des in Figur 1 oder des in Figur 2 dargestellten Reinigungssystems.

In einem Verfahrensschritt V1 wird eine Reinigungsanforderung für zumindest zwei Reinigungseinrichtungen 41, 42, 43 ermittelt. Die Reinigungsanforderung enthält Informationen darüber, welcher Kraftfahrzeugsensor S1, S2, S3 gereinigt werden soll. Folglich enthält die Reinigungsanforderung Informationen, welche Reinigungseinrichtung 41, 42, 42 aktiviert werden soll. Ferner enthält die Reinigungsanforderung Informationen darüber, wie hoch die Fluidflussrate an den Ausgängen der Reinigungseinrichtungen 41, 42, 43 sein soll. Weiterhin kann die Reinigungsanforderung Informationen enthalten, für welche Dauer die Reinigungseinrichtungen Reinigungsfluid ausgeben sollen.

In einem Verfahrensschritt V2 wird zumindest eine erste Soll-Flussrate für zumindest eine erste Reinigungseinrichtung 41, 42, 43 ermittelt. Es ist auch möglich, dass bei dem Verfahrensschritt V2 zusätzlich zumindest eine weitere Soll-Flussrate für zumindest eine zweite Reinigungseinrichtung 41, 42, 43 ermittelt wird.

In einem Verfahrensschritt V3 werden die Ausgabeanschlüsse 32_1, 32 _2, 32_3 der Fluidverteilungseinrichtung 30 in deren Offenstellung oder in deren Schließstellung entsprechend der Reinigungsanforderung eingestellt.

In einem Verfahrensschritt V4 wird eine Leistungsstufe der Fluidfördereinrichtung 20 ermittelt. Die Leistungsstufe der Fluidfördereinrichtung kann beispielsweise eine Drehzahl der Fluidfördereinrichtung 20 sein.

In einem Verfahrensschritt V5 wird der Ist-Fluiddruck, der von der Fluidfördereinrichtung 10 erzeugt wird, ermittelt.

In einem Verfahrensschritt V6 wird eine Ist-Gesamtflussrate, die von der Fluidfördereinrichtung 10 gefördert wird, basierend auf dem ermittelten Ist-Fluiddruck und der ermittelten Leistungsstufe ermittelt.

Bei dem Verfahrensschritt V6 zum Bestimmen einer Ist-Gesamtflussrate, die von der Fluidfördereinrichtung 10 gefördert wird, kann diese unter Verwendung einer Leistungsstufeninformation der Fluidfördereinrichtung 10 erfolgen. Bei einer beispielsweise als bürstenlose Gleichstrompumpe 10 ausgebildeten Fluidfördereinrichtung 10 ist eine Drehzahl der Pumpe 10 eine Leistungsstufe der Pumpe 10.

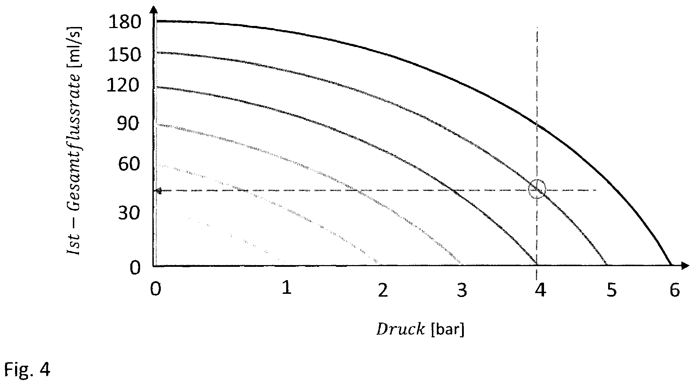

Im Genaueren kann der Verfahrensschritt V6 des Bestimmens der Ist-Gesamtflussrate unter Verwendung eines Kennfeldes der Fluidfördereinrichtung 10 erfolgen, das für unterschiedliche Leistungsstufen der Fluidfördereinrichtung 10 die von der Fluidfördereinrichtung 10 erzielbare Ist-Gesamtflussrate in Abhängigkeit des Fluiddrucks angibt. Figur 4 zeigt ein entsprechendes Kennfeld. Es ist ersichtlich, dass mit steigender Leistungsstufe größere Fluiddrücke bei gleichzeitiger größerer Flussrate von der Fluidfördereinrichtung 10 realisierbar sind. Ferner ist ersichtlich, dass mittels des in Figur 3 dargestellten Kennfeldes die Ist-Gesamtflussrate bestimmbar ist, wenn die Leistungsstufe der Fluidfördereinrichtung 10 und der von der Fluidfördereinrichtung 10 erzeugte Druck bekannt sind.

In einem Verfahrensschritt V7 wird eine erste Ist-Flussrate durch die erste Reinigungseinrichtung 41, 42, 43 basierend auf der Ist-Gesamtflussrate und basierend auf der Reinigungsanforderung bestimmt. Die Bestimmung der ersten Ist-Flussrate durch die erste Reinigungseinrichtung 41, 42, 42 ist abhängig von der von der Fluidfördereinrichtung 10 bereitgestellte Ist-Gesamtflussrate, die sich auf die Reinigungseinrichtungen 41, 42, 43 aufteilt, die einem sich in Offenstellung befindlichen Ausgabeanschluss 32_1, 32_2, 32_3 der Fluidverteilungseinrichtung 30 zugeordnet sind. Daher ist es möglich, die erste Ist-Flussrate durch die erste Reinigungseinrichtung 41, 42, 43 basierend auf der Ist-Gesamtflussrate zu bestimmen.

Wenn im Verfahrensschritt V2 eine zusätzliche Soll-Flussrate durch zumindest eine zweite Reinigungseinrichtung 41, 42, 42 ermittelt wird, dann können beim Verfahrensschritt V7 der Bestimmung der ersten Ist-Flussrate durch die erste Reinigungseinrichtung 41, 42, 43 zusätzlich noch zumindest eine weitere Flussrate durch zumindest eine weitere Reinigungseinrichtung 41, 42, 43 basierend auf der Ist-Gesamtflussrate bestimmt werden.

Bei dem Verfahrensschritt V7 des Bestimmens der ersten Ist-Flussrate durch die erste Reinigungseinrichtung 41, 42, 43 und gegebenenfalls von weiteren Flussraten durch die weiteren Reinigungseinrichtungen 41, 42, 43 erfolgt deren Bestimmung auch basierend auf Schaltstellungen der Ausgabeanschlüsse 32_1, 32_2, 32_3 der Fluidverteilungseinrichtung 30.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Dabei teilt sich die Ist-Gesamtflussrate entsprechend der Strömungswiderstände der sich flussabwärts der Ausgabeanschlüsse 32_1, 32_2, 32_3 befindlichen Leitungsstränge auf.

In einem optionalen Verfahrensschritt V8 wird ein erster Druckverlust in einem Leitungsstrang 54, 30, 51, 52, 53, 41, 42, 43, über den die erste Reinigungseinrichtung 41, 42, 43 mit der Fluidfördereinrichtung 10 fluidverbunden ist, unter Berücksichtigung der ersten Ist-Flussrate bestimmt.

Wenn im Verfahrensschritt V2 eine zusätzliche Soll-Flussrate durch zumindest eine zweite Reinigungseinrichtung 41, 42, 42 ermittelt wird, dann können beim Verfahrensschritt V8 zusätzlich zumindest ein zweiter Druckverlust in einem Leitungsstrang 54, 30, 51, 52, 53, 41, 42, 43, über den die weitere Reinigungseinrichtung 41, 42, 43 mit der Fluidfördereinrichtung 10 fluidverbunden ist, unter Berücksichtigung der ersten Ist-Flussrate bestimmt werden.

Die Bestimmung eines Druckverlustes ist abhängig von der Flussrate durch die entsprechende Reinigungseinrichtung 41, 42, 43. Der Leitungsstrang, über den die entsprechende Reinigungseinrichtung 41, 42, 43 mit der Fluidfördereinrichtung 10, im Genaueren mit dem Fluidausgabeanschluss 12 der Fluidfördereinrichtung 10 fluidverbunden ist, weist beispielsweise eine Sammelfluidleitung 54 von dem Fluidausgabeanschluss 12 zu der Fluidverteilungseinrichtung 30, die Fluidverteilungseinrichtung 30, eine Fluidleitung, über die ein Ausgabeanschluss 32_1, 32_2, 32_3 der Fluidverteilungseinrichtung 30 mit der entsprechenden Reinigungseinrichtung 41, 42, 43 fluidverbunden ist, und die entsprechende Fluidverteilungseinrichtung auf 41, 42, 43.

Der Verfahrensschritt V8 der Bestimmung des ersten Druckverlustes bzw. der mehreren Druckverluste erfolgt auch unter Berücksichtigung der von der Fluidfördereinrichtung 10 geförderten Ist-Gesamtflussrate.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Vor der Aufteilung des Reinigungsfluids auf die jeweiligen Leitungsstränge durchläuft das Reinigungsfluid die zwischen der Fluidfördereinrichtung 10 und der Fluidverteilungseinrichtung 30 befindliche Sammelleitung 54, die ebenfalls zu dem ersten Druckverlust beiträgt. Folglich durchläuft der Gesamtfluss, der von der Fluidfördereinrichtung 10 gefördert wird, diese Sammelleitung 54.

In einem Verfahrensschritt V9 wird ein Flussratenregelwert basierend auf der ersten Soll-Flussrate und der ersten Ist-Flussrate bestimmt. Im Verfahrensschritt V9 zur Bestimmung bzw. Berechnung des Flussratenregelwertes wird der Flussratenwert ermittelt, um die von der Fluidfördereinrichtung 10 erzeugte Ist-Gesamtflussrate zu verändern, damit Reinigungsfluid mit der ersten Soll-Flussrate aus der ersten Reinigungseinrichtung 41, 42, 43 ausgegeben werden kann. Der Flussratenregelwert wird beispielsweise aus der Differenz der ersten Soll-Flussrate und der ersten Ist-Flussrate berechnet.

In einem Verfahrensschritt V10 wird die Fluidfördereinrichtung 10 derart eingestellt, dass eine von der Fluidfördereinrichtung 10 bereitgestellte Fluidflussrate um den Flussratenregelwert verändert wird, so dass sich die erste Ist-Flussrate der ersten Soll-Flussrate annähert.

Die Verfahrensschritte V1 bis V3 werden vorzugsweise pro Reinigungsanforderung lediglich einmal ausgeführt, wohingegen die Verfahrensschritte V4 bis V10 vorzugsweise sooft ausgeführt werden, bis sich der Flussratenregelwert einem vorbestimmten Wert angenähert hat.

Wie bereits oben angegeben zeigt Figur 5 das Flussablaufdiagramm eines Verfahrens gemäß einer weiteren Ausführungsform zum Regeln des in Figur 1 oder des in Figur 2 dargestellten Reinigungssystems.

Im Verfahrensschritt V1_1 wird eine Reinigungsanforderung für zumindest zwei, vorzugsweise für alle Reinigungseinrichtungen 41, 42, 43 ermittelt. Die Reinigungsanforderung enthält Informationen darüber, welcher Kraftfahrzeugsensor S1, S2, S3 gereinigt werden soll. Folglich enthält die Reinigungsanforderung Informationen, welche Reinigungseinrichtung 41, 42, 42 aktiviert werden soll. Ferner enthält die Reinigungsanforderung Informationen darüber, wie hoch die Fluidflussrate an den Ausgängen der Reinigungseinrichtungen 41, 42, 43 sein soll. Weiterhin kann die Reinigungsanforderung Informationen enthalten, für welche Dauer die Reinigungseinrichtungen Reinigungsfluid ausgeben sollen.

Im Verfahrensschritt V2_1 werden die jeweiligen Soll-Flussraten für jede Reinigungseinrichtung 41, 42, 43 ermittelt.

Im Verfahrensschritt V3 werden die Ausgabeanschlüsse 32_1, 32_2, 32_3 der Fluidverteilungseinrichtung 30 in deren Offenstellung oder in deren Schließstellung entsprechend der Reinigungsanforderung eingestellt.

In einem Verfahrensschritt V4 wird eine Leistungsstufe der Fluidfördereinrichtung 20 ermittelt. Die Leistungsstufe der Fluidfördereinrichtung kann beispielsweise eine Drehzahl der Fluidfördereinrichtung 20 sein.

In einem Verfahrensschritt V5 wird der Ist-Fluiddruck, der von der Fluidfördereinrichtung 10 erzeugt wird, ermittelt.

Im Verfahrensschritt V6 wird eine Ist-Gesamtflussrate, die von der Fluidfördereinrichtung 10 gefördert wird, basierend auf dem ermittelten Ist-Fluiddruck und der ermittelten Leistungsstufe ermittelt.

Bei dem Verfahrensschritt V6 zum Bestimmen einer Ist-Gesamtflussrate, die von der Fluidfördereinrichtung 10 gefördert wird, kann diese unter Verwendung einer Leistungsstufeninformation der Fluidfördereinrichtung 10 erfolgen. Bei einer beispielsweise als bürstenlose Gleichstrompumpe 10 ausgebildeten Fluidfördereinrichtung 10 ist eine Drehzahl der Pumpe 10 eine Leistungsstufe der Pumpe 10.

Im Genaueren kann der Verfahrensschritt V6 des Bestimmens der Ist-Gesamtflussrate unter Verwendung eines Kennfeldes der Fluidfördereinrichtung 10 erfolgen, das für unterschiedliche Leistungsstufen der Fluidfördereinrichtung 10 die von der Fluidfördereinrichtung 10 erzielbare Ist-Gesamtflussrate in Abhängigkeit des Fluiddrucks angibt. Figur 3 zeigt ein entsprechendes Kennfeld. Es ist ersichtlich, dass mit steigender Leistungsstufe größere Fluiddrücke bei gleichzeitiger größerer Flussrate von der Fluidfördereinrichtung 10 realisierbar sind. Ferner ist ersichtlich, dass mittels des in Figur 3 dargestellten Kennfeldes die Ist-Gesamtflussrate bestimmbar ist, wenn die Leistungsstufe der Fluidfördereinrichtung 10 und der von der Fluidfördereinrichtung 10 erzeugte Druck bekannt sind.

Im Verfahrensschritt V7_1 wird eine Soll-Gesamtflussrate durch die Reinigungseinrichtungen 41, 42, 43 basierend auf der Reinigungsanforderung bestimmt.

Im optionalen Verfahrensschritt V8 wird ein erster Druckverlust in einem Leitungsstrang 54, 30, 51, 52, 53, 41, 42, 43, über den die erste Reinigungseinrichtung 41, 42, 43 mit der Fluidfördereinrichtung 10 fluidverbunden ist, unter Berücksichtigung der ersten Ist-Flussrate bestimmt. Dieser Verfahrensschritt wird entweder von der Steuerungseinrichtung 60 oder von der Fluidfördereinrichtung 10 ausgeführt.

Wenn im Verfahrensschritt V2 eine zusätzliche Soll-Flussrate durch zumindest eine zweite Reinigungseinrichtung 41, 42, 42 ermittelt wird, dann können beim Verfahrensschritt V8 zusätzlich zumindest ein zweiter Druckverlust in einem Leitungsstrang 54, 30, 51, 52, 53, 41, 42, 43, über den die weitere Reinigungseinrichtung 41, 42, 43 mit der Fluidfördereinrichtung 10 fluidverbunden ist, unter Berücksichtigung der ersten Ist-Flussrate bestimmt werden.

Der Verfahrensschritt V8 der Bestimmung des ersten Druckverlustes bzw. der mehreren Druckverluste erfolgt auch unter Berücksichtigung der von der Fluidfördereinrichtung 10 geförderten Ist-Gesamtflussrate.

Denn das von der Fluidfördereinrichtung 10 geförderte Reinigungsfluid teilt sich auf die Leitungsstränge auf, in denen die diesen Leitungssträngen zugeordneten Ausgabeanschlüsse 32_1, 32_2, 32_3 der Fluidverteilungseinrichtung 30 sich in deren jeweiligen Offenstellungen befinden. Vor der Aufteilung des Reinigungsfluids auf die jeweiligen Leitungsstränge durchläuft das Reinigungsfluid die zwischen der Fluidfördereinrichtung 10 und der Fluidverteilungseinrichtung 30 befindliche Sammelleitung 54, die ebenfalls zu dem ersten Druckverlust beiträgt. Folglich durchläuft der Gesamtfluss, der von der Fluidfördereinrichtung 10 gefördert wird, diese Sammelleitung 54.

Im Verfahrensschritt V9_1 wird ein Flussratenregelwert basierend auf der Soll-Gesamtflussrate und der Ist-Gesamtflussrate bestimmt. Im Verfahrensschritt V9_1 zur Bestimmung bzw. Berechnung des Flussratenregelwertes wird der Flussratenwert ermittelt, um die von der Fluidfördereinrichtung 10 erzeugte Ist-Gesamtflussrate zu verändern, damit Reinigungsfluid mit der Soll-Gesamtflussrate aus den Reinigungseinrichtungen 41, 42, 43 ausgegeben werden kann. Der Flussratenregelwert wird beispielsweise aus der Differenz der Soll-Gesamtflussrate und der Ist-Gesamtflussrate berechnet.

Im Verfahrensschritt V10_1 wird die Fluidfördereinrichtung 10 derart eingestellt, dass eine von der Fluidfördereinrichtung 10 bereitgestellte Ist-Gesamtflussrate um den Flussratenregelwert verändert wird, so dass sich die Ist-Gesamtflussrate der Soll-Gesamtflussrate annähert.

Die Verfahrensschritte V1 bis V3 werden pro Reinigungsanforderung lediglich einmal ausgeführt, wohingegen die Verfahrensschritte V4 bis V10_1 sooft ausgeführt werden, bis sich der Flussratenregelwert einem vorbestimmten Wert angenähert hat.

### Bezugszeichenliste

- 1: Reinigungssystem
- 10: Fluidfördereinrichtung / Pumpe
- 11: Fluideingangsanschluss (der Fluidfördereinrichtung)
- 12: Fluidausgabeanschluss (der Fluidfördereinrichtung)
- 20: Drucksensor
- 30: Fluidverteilungseinrichtung / Ventilblock
- 31: Eingangsanschluss (der Fluidverteilungseinrichtung)
- 32_1: (erster) Ausgabeanschluss (der Fluidverteilungseinrichtung)
- 32_2: (zweiter) Ausgabeanschluss (der Fluidverteilungseinrichtung)
- 32_3: (dritter) Ausgabeanschluss (der Fluidverteilungseinrichtung)
- 41: (erste) Reinigungseinrichtung / Reinigungsdüse
- 42: (zweite) Reinigungseinrichtung / Reinigungsdüse
- 43: (dritte) Reinigungseinrichtung / Reinigungsdüse
- 51: (erste) Fluidleitung
- 52: (zweite) Fluidleitung
- 53: (dritte) Fluidleitung
- 54: Sammelfluidleitung
- 60: Steuerungseinrichtung
- 61: Datenleitung / Signalleitung
- 62: Datenleitung / Signalleitung

- 51: (erste) Kraftfahrzeugkomponente / (erster) Sensor / Kraftfahrzeugsensor / optischer Sensor
- S2: (zweite) Kraftfahrzeugkomponente / (zweiter) Sensor / Kraftfahrzeugsensor / optischer Sensor
- S3: (dritte) Kraftfahrzeugkomponente / (dritter) Sensor / Kraftfahrzeugsensor / optischer Sensor

- V1: Verfahrensschritt
- V1_1: Verfahrensschritt
- V2: Verfahrensschritt
- V2_1: Verfahrensschritt
- V3: Verfahrensschritt
- V4: Verfahrensschritt
- V5: Verfahrensschritt
- V6: Verfahrensschritt
- V7: Verfahrensschritt
- V7_1: Verfahrensschritt
- V8: Verfahrensschritt
- V9: Verfahrensschritt
- V9_1: Verfahrensschritt
- V10: Verfahrensschritt
- V10_1: Verfahrensschritt

## Patentansprüche

1. Verfahren zum Regeln eines Reinigungssystems für Kraftfahrzeugkomponenten (S1, S2, S3), wobei das Reinigungssystem folgendes aufweist:
- eine Fluidfördereinrichtung (10);
- einen Drucksensor (20) zum Bestimmen eines von der Fluidfördereinrichtung (10) erzeugten Drucks;
- eine Fluidverteilungseinrichtung (30) mit zumindest einem mit der Fluidfördereinrichtung (10) fluidverbundenen Eingangsanschluss (31) und mit zumindest zwei mit dem Eingangsanschluss (31) fluidverbundenen Ausgabeanschlüssen (32_1, 32_2, 32_3), wobei jeder Ausgabeanschluss (32_1, 32_2, 32_3) zwischen einer Offenstellung und einer Schließstellung verstellbar ist;
- zumindest zwei jeweils über eine Fluidleitung (51, 52, 53) mit jeweils einem Ausgabeanschluss (32_1, 32_2, 32_3) fluidverbundenen Reinigungseinrichtungen (41, 42, 43); und
- eine Steuerungseinrichtung (60), die mit der Fluidfördereinrichtung (10) und der Fluidverteilungseinrichtung (30) zum Übertragen und/oder Empfangen von Signalen datengekoppelt ist,
wobei das Verfahren folgende Verfahrensschritte aufweist:
- Ermitteln (V1) einer Reinigungsanforderung für zumindest zwei Reinigungseinrichtungen (41, 42, 43);
- Ermitteln (V2) einer ersten Soll-Flussrate für zumindest eine erste Reinigungseinrichtung (41, 42, 43);
- Einstellen (V3) der Ausgabeanschlüsse (32_1, 32_2, 32_3) der Fluidverteilungseinrichtung (30) in deren Offenstellung oder in deren Schließstellung entsprechend der Reinigungsanforderung;
- Ermitteln (V4) einer Leistungsstufe der Fluidfördereinrichtung (30);
- Ermitteln (V5) eines Ist-Fluiddrucks, der von der Fluidfördereinrichtung (10) erzeugt wird;
- Bestimmen (V6) einer Ist-Gesamtflussrate, die von der Fluidfördereinrichtung (10) gefördert wird, basierend auf dem ermittelten Ist-Fluiddruck und der ermittelten Leistungsstufe;
- Bestimmen (V7) einer ersten Ist-Flussrate durch den Ausgabeanschluss (32_1, 32_2, 32_3), an den die zumindest eine erste Reinigungseinrichtung (41, 41, 43) angeschlossen ist, oder durch die zumindest eine erste Reinigungseinrichtung (41, 42, 43) basierend auf der Ist-Gesamtflussrate und basierend auf der Reinigungsanforderung;
- Bestimmen (V9) eines Flussratenregelwertes basierend auf der ersten Soll-Flussrate und der ersten Ist-Flussrate; und
- Einstellen (V10) der Fluidfördereinrichtung (10) derart, dass die von der Fluidfördereinrichtung (10) bereitgestellte Ist-Gesamtflussrate um den Flussratenregelwert verändert wird, so dass sich die erste Ist-Flussrate der ersten Soll-Flussrate annähert.

2. Verfahren nach Anspruch 1, **dadurch gekennzeichnet, dass** der Verfahrensschritt (V7) des Bestimmens der ersten Ist-Flussrate durch die erste Reinigungseinrichtung (41, 42, 43) auch basierend auf Schaltstellungen der Ausgabeanschlüsse (32_1, 32_2, 32_3) der Fluidverteilungseinrichtung (30) erfolgt.

3. Verfahren nach einem der vorhergehenden Ansprüchen, **dadurch gekennzeichnet, dass** der Verfahrensschritt (V7) des Bestimmens der ersten Ist-Flussrate auch basierend auf einer ersten Umsetzungstabelle erfolgt, die die Verhältnisse der Flussraten durch die den jeweiligen Reinigungseinrichtungen (41, 42, 43) zugeordneten Leitungspfaden (51, 52, 53, 41, 42, 43) in Abhängigkeit von Ist-Gesamtflussraten angibt, die von der Fluidfördereinrichtung (10) bereitgestellt werden.

4. Verfahren nach einem der vorhergehenden Ansprüchen, **dadurch gekennzeichnet, dass** der Verfahrensschritt (V7) des Bestimmens der ersten Ist-Flussrate basierend auf zumindest einer zweiten Umsetzungstabelle erfolgt, wobei in einer zweiten Umsetzungstabelle die prozentualen Flussraten durch die den jeweiligen Reinigungseinrichtungen (41, 42, 43) zugeordneten Leitungspfaden (51, 52, 53, 41, 42, 43) für alle Permutationen von Schaltstellungen sämtlicher Ausgabeanschlüsse (32_1, 32_2, 32_3) der Fluidverteilungseinrichtung (30) für eine von der Fluidfördereinrichtung (10) bereitgestellte Ist-Gesamtflussrate angegeben sind.

5. Verfahren nach einem der vorhergehenden Ansprüchen, **dadurch gekennzeichnet, dass** bei dem Verfahrensschritt (V2) des Ermittelns von zumindest einer ersten Soll-Flussrate für zumindest eine erste Reinigungseinrichtung (41, 42, 43) zusätzlich zumindest eine weitere Soll-Flussrate für zumindest eine zweite Reinigungseinrichtung (41, 42, 43) ermittelt wird und ein basierend auf diesen ermittelten Soll-Flussraten berechneter Wert als Soll-Flussrate übernommen wird.

6. Verfahren zum Regeln eines Reinigungssystems für Kraftfahrzeugkomponenten (S1, S2, S3), wobei das Reinigungssystem folgendes aufweist:
- eine Fluidfördereinrichtung (10);
- einen Drucksensor (20) zum Bestimmen eines von der Fluidfördereinrichtung (10) erzeugten Drucks;
- eine Fluidverteilungseinrichtung (30) mit zumindest einem mit der Fluidfördereinrichtung (10) fluidverbundenen Eingangsanschluss (31) und mit zumindest zwei mit dem Eingangsanschluss (31) fluidverbundenen Ausgabeanschlüssen (32_1, 32_2, 32_3), wobei jeder Ausgabeanschluss (32_1, 32_2, 32_3) zwischen einer Offenstellung und einer Schließstellung verstellbar ist;
- zumindest zwei jeweils über eine Fluidleitung (51, 52, 53) mit jeweils einem Ausgabeanschluss (32_1, 32_2, 32_3) fluidverbundenen Reinigungseinrichtungen (41, 42, 43); und
- eine Steuerungseinrichtung (60), die mit der Fluidfördereinrichtung (10) und der Fluidverteilungseinrichtung (30) zum Übertragen und/oder Empfangen von Signalen datengekoppelt ist,
wobei das Verfahren folgende Verfahrensschritte aufweist:
- Ermitteln (V1_1) einer Reinigungsanforderung für zumindest zwei Reinigungseinrichtungen (41, 42, 43);
- Ermitteln (V2_1) von jeweiligen Soll-Flussraten für jede Reinigungseinrichtung (41, 42, 43);
- Einstellen (V3) der Ausgabeanschlüsse (32_1, 32_2, 32_3) der Fluidverteilungseinrichtung (30) in deren Offenstellung oder in deren Schließstellung entsprechend der Reinigungsanforderung;
- Ermitteln (V4) einer Leistungsstufe der Fluidfördereinrichtung (30);
- Ermitteln (V5) eines Ist-Fluiddrucks, der von der Fluidfördereinrichtung (10) erzeugt wird;
- Bestimmen (V6) einer Ist-Gesamtflussrate, die von der Fluidfördereinrichtung (10) gefördert wird, basierend auf dem ermittelten Ist-Fluiddruck und der ermittelten Leistungsstufe;
- Bestimmen (V7_1) einer Soll-Gesamtflussrate durch die Reinigungseinrichtungen (41, 42, 43) basierend auf der Reinigungsanforderung;
- Bestimmen (V9_1) eines Flussratenregelwertes basierend auf der Soll-Gesamtflussrate und der Ist-Gesamtflussrate; und
- Einstellen (V10_1) der Fluidfördereinrichtung (10) derart, dass die von der Fluidfördereinrichtung (10) bereitgestellte Ist-Gesamtflussrate um den Flussratenregelwert verändert wird, so dass sich die Ist-Gesamtflussrate der Soll-Gesamtflussrate annähert.

7. Verfahren nach einem der vorhergehenden Ansprüchen, **dadurch gekennzeichnet, dass** der Verfahrensschritt (V6) des Bestimmens einer Ist-Gesamtflussrate, die von der Fluidfördereinrichtung (10) gefördert wird, unter Verwendung eines Kennfeldes der Fluidfördereinrichtung (10) erfolgt, das für unterschiedliche Leistungsstufen der Fluidfördereinrichtung (10) die von der Fluidfördereinrichtung (10) erzielbare Ist-Gesamtflussrate in Abhängigkeit des Fluiddrucks angibt.

8. Reinigungssystem für Kraftfahrzeugkomponenten (S1, S2, S3), aufweisend:
- eine Fluidfördereinrichtung (10);
- einen Drucksensor (20) zum Bestimmen eines von der Fluidfördereinrichtung (10) erzeugten Drucks;
- eine Fluidverteilungseinrichtung (30) mit zumindest einem mit der Fluidfördereinrichtung (10) fluidverbundenen Eingangsanschluss (31) und mit zumindest zwei mit dem Eingangsanschluss (31) fluidverbundenen Ausgabeanschlüssen (32_1, 32_2, 32_3), wobei jeder Ausgabeanschluss (32_1, 32_2, 32_3) zwischen einer Offenstellung und einer Schließstellung verstellbar ist;
- zumindest zwei jeweils über eine Fluidleitung (51, 52, 53) mit jeweils einem Ausgabeanschluss (32_1, 32_2, 32_3) fluidverbundenen Reinigungseinrichtungen (41, 42, 43); und
- eine Steuerungseinrichtung (60), die mit der Fluidfördereinrichtung (10) und der Fluidverteilungseinrichtung (30) zum Übertragen und/oder Empfangen von Signalen datengekoppelt ist,
wobei das Reinigungssystem **dadurch gekennzeichnet ist, dass** die Steuerungseinrichtung (60) dazu ausgebildet ist, ein Verfahren nach einem der Ansprüche 1 bis 7 auszuführen.

9. Kraftfahrzeug mit zumindest zwei Kraftfahrzeugkomponenten (S1, S2, S3) und mit einem Reinigungssystem zum Reinigen der Kraftfahrzeugkomponenten (S1, S2, S3) nach Anspruch 8.

## Claims

1. Method for controlling a cleaning system for motor vehicle components (S1, S2, S3), the cleaning system comprising:
- a fluid conveying device (10);
- a pressure sensor (20) for determining a pressure generated by the fluid conveying device (10);
- a fluid distribution device (30) with at least one input connection (31) fluidly connected to the fluid conveying device (10) and with at least two output connections (32_1, 32_2, 32_3) fluidly connected to the input connection (31), wherein each output connection (32_1, 32_2, 32_3) is adjustable between an open position and a closed position;
- at least two cleaning devices (41, 42, 43) each fluidly connected via a fluid pipe (51, 52, 53) to a respective output connection (32_1, 32_2, 32_3); and
- a control device (60) which is data-coupled to the fluid conveying device (10) and the fluid distribution device (30) for transmitting and/or receiving signals,
wherein the method comprises the following process steps:
- determining (V1) a cleaning requirement for at least two cleaning devices (41, 42, 43);
- Determining (V2) a first set flow rate for at least a first cleaning device (41, 42, 43);
- Setting (V3) the output connections (32_1, 32_2, 32_3) of the fluid distribution device (30) in their open position or in their closed position according to the cleaning requirement;
- Determining (V4) a power level of the fluid conveying device (10);
- Determining (V5) an actual fluid pressure generated by the fluid conveying device (10);
- Determining (V6) an actual total flow rate conveyed by the fluid conveying device (10) based on the determined actual fluid pressure and the determined power level;
- Determining (V7) a first actual flow rate by the output connection (32_1, 32_2, 32_3) to which the at least one first cleaning device (41, 41, 43) is connected, or by the at least one first cleaning device (41, 42, 43) based on the actual total flow rate and based on the cleaning requirement;
- Determine (V9) a flow rate control value based on the first set flow rate and the first actual flow rate; and
- Adjusting (V10) the fluid conveying device (10) in such a way that the actual total flow rate provided by the fluid conveying device (10) is changed by the flow rate control value so that the first actual flow rate approaches the first set flow rate.

2. Method according to claim 1, **characterized in that** the method step (V7) of determining the first actual flow rate by the first cleaning device (41, 42, 43) is also carried out based on switching positions of the output connections (32_1, 32_2, 32_3) of the fluid distribution device (30).

3. Method according to one of the preceding claims, **characterized in that** the method step (V7) of determining the first actual flow rate is also based on a first conversion table indicating the ratios of the flow rates through the conveying paths (51, 52, 53, 41, 42, 43) associated with the particular cleaning devices (41, 42, 43) as a function of actual total flow rates provided by the fluid conveying device (10).

4. Method according to one of the preceding claims, **characterized in that** the method step (V7) of determining the first actual flow rate is carried out based on at least a second conversion table, wherein in a second conversion table the percentage flow rates are determined by the conveying paths (51, 52, 53, 41, 42, 43) associated with the respective cleaning devices (41, 42, 43) for all permutations of switching positions of all output connections (32_1, 32_2, 32_3) of the fluid distribution device (30) for an actual total flow rate provided by the fluid conveying device (10).

5. Method according to one of the preceding claims, **characterized in that** in the method step (V2) of determining at least one first set flow rate for at least one first cleaning device (41, 42, 43), additionally at least one further set flow rate for at least one second cleaning device (41, 42, 43) is determined and a value calculated on the basis of these determined set flow rates is adopted as the set flow rate.

6. Method for controlling a cleaning system for motor vehicle components (S1, S2, S3), the cleaning system comprising:
- a fluid conveying device (10);
- a pressure sensor (20) for determining a pressure generated by the fluid conveying device (10);
- a fluid distribution device (30) with at least one input connection (31) fluidly connected to the fluid conveying device (10) and with at least two output connections (32_1, 32_2, 32_3) fluidly connected to the input connection (31), wherein each output connection (32_1, 32_2, 32_3) is adjustable between an open position and a closed position;
- at least two cleaning devices (41, 42, 43) each fluidly connected via a fluid pipe (51, 52, 53) to a respective output connection (32_1, 32_2, 32_3); and
- a control device (60) which is data-coupled to the fluid conveying device (10) and the fluid distribution device (30) for transmitting and/or receiving signals,
wherein the method comprises the following process steps:
- Determining (V1_1) a cleaning requirement for at least two cleaning devices (41, 42, 43);
- Determination (V2_1) of respective set flow rates for each cleaning device (41, 42, 43);
- Setting (V3) the output connections (32_1, 32_2, 32_3) of the fluid distribution device (30) in their open position or in their closed position according to the cleaning requirement;
- Determining (V4) a power level of the fluid conveying device (10);
- Determining (V5) an actual fluid pressure generated by the fluid conveying device (10);
- Determining (V6) an actual total flow rate conveyed by the fluid conveying device (10) based on the determined actual fluid pressure and the determined power level;
- Determining (V7_1) a set total flow rate through the cleaning devices (41, 42, 43) based on the cleaning requirement;
- Determining (V9_1) a flow rate control value based on the set total flow rate and the actual total flow rate; and
- Adjusting (V10_1) the fluid conveying device (10) in such a way that the actual total flow rate provided by the fluid conveying device (10) is changed by the flow rate control value so that the actual total flow rate approaches the set total flow rate.

7. Method according to one of the preceding claims, **characterized in that** the method step (V6) of determining an actual total flow rate which is conveyed by the fluid conveying device (10) is carried out using a characteristic diagram of the fluid conveying device (10) which indicates for different power levels of the fluid conveying device (10) the actual total flow rate which can be achieved by the fluid conveying device (10) as a function of the fluid pressure.

8. Cleaning system for motor vehicle components (S1, S2, S3), comprising:
- a fluid conveying device (10);
- a pressure sensor (20) for determining a pressure generated by the fluid conveying device (10);
- a fluid distribution device (30) with at least one input connection (31) fluidly connected to the fluid conveying device (10) and with at least two output connections (32_1, 32_2, 32_3) fluidly connected to the input connection (31), wherein each output connection (32_1, 32_2, 32_3) is adjustable between an open position and a closed position;
- at least two cleaning devices (41, 42, 43) each fluidly connected via a fluid pipe (51, 52, 53) to a respective output connection (32_1, 32_2, 32_3); and
- a control device (60) which is data-coupled to the fluid conveying device (10) and the fluid distribution device (30) for transmitting and/or receiving signals,
wherein the cleaning system is **characterized in that** the control device (60) is configured to carry out a method according to one of claims 1 to 7.

9. Motor vehicle with at least two motor vehicle components (S1, S2, S3) and with a cleaning system for cleaning the motor vehicle components (S1, S2, S3) according to claim 8.

## Revendications

1. Procédé pour la régulation d'un système de nettoyage pour des composants de véhicule automobile (S1, S2, S3), dans lequel le système de nettoyage présente les éléments suivants :
- un dispositif de transport de fluide (10) ;
- un capteur de pression (20) permettant de définir une pression générée par le dispositif de transport de fluide (10) ;
- un dispositif de distribution de fluide (30) comportant au moins un raccord d'entrée (31) relié fluidiquement au dispositif de transport de fluide (10) et comportant au moins deux raccords de sortie (32_1, 32_2, 32_3) reliés fluidiquement au raccord d'entrée (31), dans lequel chaque raccord de sortie (32_1, 32_2, 32_3) peut être réglé entre une position ouverte et une position fermée ;
- au moins deux dispositifs de nettoyage (41, 42, 43) reliés fluidiquement à respectivement un raccord de sortie (32_1, 32_2, 32_3) par l'intermédiaire de respectivement une conduite de fluide (51, 52, 53) ; et
- un dispositif de commande (60) qui est couplé par données au dispositif de transport de fluide (10) et au dispositif de distribution de fluide (30) pour la transmission et/ou la réception de signaux,
dans lequel le procédé présente les étapes de procédé suivantes :
- détermination (V1) d'une demande de nettoyage pour au moins deux dispositifs de nettoyage (41, 42, 43) ;
- détermination (V2) d'un premier débit de consigne pour au moins un premier dispositif de nettoyage (41, 42, 43) ;
- réglage (V3) des raccords de sortie (32_1, 32_2, 32_3) du dispositif de distribution de fluide (30) dans leur position ouverte ou dans leur position fermée en fonction de la demande de nettoyage ;
- détermination (V4) d'un niveau de performance du dispositif de transport de fluide (30) ;
- détermination (V5) d'une pression de fluide réelle qui est générée par le dispositif de transport de fluide (10) ;
- définition (V6) d'un débit total réel transporté par le dispositif de transport de fluide (10) sur la base de la pression de fluide réelle déterminée et du niveau de puissance déterminé ;
- définition (V7) d'un premier débit réel à travers le raccord de sortie (32_1, 32_2, 32_3) auquel l'au moins un premier dispositif de nettoyage (41, 41, 43) est raccordé ou à travers l'au moins un premier dispositif de nettoyage (41, 42, 43) sur la base du débit total réel et sur la base de la demande de nettoyage ;
- définition (V9) d'une valeur de régulation de débit sur la base du premier débit de consigne et du premier débit réel ; et
- réglage (V10) du dispositif de transport de fluide (10) de telle sorte que le débit total réel fourni par le dispositif de transport de fluide (10) est modifié de la valeur de régulation de débit, de sorte que le premier débit réel se rapproche du premier débit de consigne.

2. Procédé selon la revendication 1, **caractérisé en ce que** l'étape de procédé (V7) de définition du premier débit réel à travers le premier dispositif de nettoyage (41, 42, 43) est effectuée également sur la base de positions de commutation des raccords de sortie (32_1, 32_2, 32_3) du dispositif de distribution de fluide (30).

3. Procédé selon l'une des revendications précédentes,
**caractérisé en ce que** l'étape de procédé (V7) de définition du premier débit réel est également effectuée sur la base d'un premier tableau de conversion qui indique les rapports des débits à travers les voies de conduite (51, 52, 53, 41, 42, 43) associées aux dispositifs de nettoyage (41, 42, 43) respectifs en fonction de débits totaux réels fournis par le dispositif de transport de fluide (10).

4. Procédé selon l'une des revendications précédentes,
**caractérisé en ce que** l'étape de procédé (V7) de définition du premier débit réel est effectuée sur la base d'au moins un second tableau de conversion, dans lequel les pourcentages de débits à travers les voies de conduite (51, 52, 53, 41, 42, 43) associées aux dispositifs de nettoyage (41, 42, 43) respectifs pour toutes les permutations de positions de commutation de tous les raccords de sortie (32_1, 32_2, 32_3) du dispositif de distribution de fluide (30) pour un débit total réel fourni par le dispositif de transport de fluide (10) sont indiqués dans un second tableau de conversion.

5. Procédé selon l'une des revendications précédentes,
**caractérisé en ce que,** lors de l'étape de procédé (V2) de détermination d'au moins un premier débit de consigne pour au moins un premier dispositif de nettoyage (41, 42, 43), au moins un autre débit de consigne pour au moins un second dispositif de nettoyage (41, 42, 43) est en outre déterminé et une valeur calculée sur la base desdits débits de consigne déterminés est prise comme débit de consigne.

6. Procédé pour la régulation d'un système de nettoyage pour des composants de véhicule automobile (S1, S2, S3), dans lequel le système de nettoyage présente les éléments suivants :
- un dispositif de transport de fluide (10) ;
- un capteur de pression (20) permettant de définir une pression générée par le dispositif de transport de fluide (10) ;
- un dispositif de distribution de fluide (30) comportant au moins un raccord d'entrée (31) relié fluidiquement au dispositif de transport de fluide (10) et comportant au moins deux raccords de sortie (32_1, 32_2, 32_3) reliés fluidiquement au raccord d'entrée (31), dans lequel chaque raccord de sortie (32_1, 32_2, 32_3) peut être réglé entre une position ouverte et une position fermée ;
- au moins deux dispositifs de nettoyage (41, 42, 43) reliés fluidiquement à respectivement un raccord de sortie (32_1, 32_2, 32_3) par l'intermédiaire de respectivement une conduite de fluide (51, 52, 53) ; et
- un dispositif de commande (60) qui est couplé par données au dispositif de transport de fluide (10) et au dispositif de distribution de fluide (30) pour la transmission et/ou la réception de signaux,
dans lequel le procédé présente les étapes de procédé suivantes :
- détermination (V1_1) d'une demande de nettoyage pour au moins deux dispositifs de nettoyage (41, 42, 43) ;
- détermination (V2_1) de débits de consigne respectifs pour chaque dispositif de nettoyage (41, 42, 43) ;
- réglage (V3) des raccords de sortie (32_1, 32_2, 32_3) du dispositif de distribution de fluide (30) dans leur position ouverte ou dans leur position fermée en fonction de la demande de nettoyage ;
- détermination (V4) d'un niveau de performance du dispositif de transport de fluide (30) ;
- détermination (V5) d'une pression de fluide réelle qui est générée par le dispositif de transport de fluide (10) ;
- définition (V6) d'un débit total réel transporté par le dispositif de transport de fluide (10) sur la base de la pression de fluide réelle déterminée et du niveau de puissance déterminé ;
- définition (V7_1) d'un débit total de consigne à travers les dispositifs de nettoyage (41, 42, 43) sur la base de la demande de nettoyage ;
- définition (V9_1) d'une valeur de régulation de débit sur la base du débit total de consigne et du débit total réel ; et
- réglage (V10_1) du dispositif de transport de fluide (10) de telle sorte que le débit total réel fourni par le dispositif de transport de fluide (10) est modifié de la valeur de régulation de débit, de sorte que le débit total réel se rapproche du débit total de consigne.

7. Procédé selon l'une des revendications précédentes,
**caractérisé en ce que** l'étape de procédé (V6) de définition d'un débit total réel transporté par le dispositif de transport de fluide (10) est effectuée à l'aide d'un diagramme caractéristique du dispositif de transport de fluide (10), lequel diagramme caractéristique indique, pour différents niveaux de puissance du dispositif de transport de fluide (10), le débit total réel pouvant être obtenu par le dispositif de transport de fluide (10) en fonction de la pression de fluide.

8. Système de nettoyage pour des composants de véhicule automobile (S1, S2, S3), présentant :
- un dispositif de transport de fluide (10) ;
- un capteur de pression (20) permettant de définir une pression générée par le dispositif de transport de fluide (10) ;
- un dispositif de distribution de fluide (30) comportant au moins un raccord d'entrée (31) relié fluidiquement au dispositif de transport de fluide (10) et comportant au moins deux raccords de sortie (32_1, 32_2, 32_3) reliés fluidiquement au raccord d'entrée (31), dans lequel chaque raccord de sortie (32_1, 32_2, 32_3) peut être réglé entre une position ouverte et une position fermée ;
- au moins deux dispositifs de nettoyage (41, 42, 43) reliés fluidiquement à respectivement un raccord de sortie (32_1, 32_2, 32_3) par l'intermédiaire de respectivement une conduite de fluide (51, 52, 53) ; et
- un dispositif de commande (60) qui est couplé par données au dispositif de transport de fluide (10) et au dispositif de distribution de fluide (30) pour la transmission et/ou la réception de signaux,
dans lequel le système de nettoyage est **caractérisé en ce que** le dispositif de commande (60) est configuré pour exécuter un procédé selon l'une des revendications 1 à 7.

9. Véhicule automobile comportant au moins deux composants de véhicule automobile (S1, S2, S3) et comportant un système de nettoyage pour le nettoyage des composants de véhicule automobile (S1, S2, S3) selon la revendication 8.
